(19) **Europäisches Patentamt / European Patent Office / Office européen des brevets**

(11) **EP 4 693 968 A2**

(12) **EUROPEAN PATENT APPLICATION**
published in accordance with Art. 153(4) EPC

(43) Date of publication:
**11.02.2026 Bulletin 2026/07**

(21) Application number: **24785245.2**

(22) Date of filing: **04.04.2024**

(51) International Patent Classification (IPC):
**H04L 1/00** (2006.01)   **H04L 1/08** (2006.01)
**H04L 5/14** (2006.01)

(52) Cooperative Patent Classification (CPC):
**H04L 1/00; H04L 1/08; H04L 5/14**

(86) International application number:
**PCT/KR2024/004389**

(87) International publication number:
**WO 2024/210544 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.04.2023 KR 20230044890**

(71) Applicant: **LG Electronics Inc.**
**Yeongdeungpo-gu**
**Seoul 07336 (KR)**

(72) Inventors:
• **YOU, Hyangsun**
 **Seoul 06772 (KR)**
• **KO, Hyunsoo**
 **Seoul 06772 (KR)**

(74) Representative: **Plasseraud IP**
**104 Rue de Richelieu**
**CS92104**
**75080 Paris Cedex 02 (FR)**

(54) **METHOD FOR OPERATING DEVICE AND DEVICE USING SAME IN WIRELESS COMMUNICATION SYSTEM**

(57) Provided are a method for operating a device and a device using same in a wireless communication system. The method involves: generating encoded bits; and transmitting the encoded bits in a plurality of symbols through an uplink channel, wherein the plurality of symbols include FD symbols and HD symbols. In each of the plurality of symbols, differently rate-matched bits among the encoded bits are transmitted according to RV values. The rate-matched bits transmitted in the respective symbols have a start bit position that depends on the RV values in the encoded bits, and the start bit position of rate-matched bits in an n-th transmission is determined differently according to whether the symbol in which an (n-1)-th transmission is performed is the FD symbol or the HD symbol.

**FIG. 20**

| Generating encoded bits | S201 |

Transmitting the encoded bits in a plurality of symbols comprising an FD symbol and a HD symbol through an uplink channel, wherein different rate-matched bits are transmitted among the encoded bits according to the RV value in each of the plurality of symbols. Rate-matched bits transmitted in each symbol have a starting bit position according to the RV value in the encoded bits, and when transmitting the first rate-matched bits by the (n-1)-th transmission among the rate-matched bits and transmitting the second rate-matched bits by the n-th transmission, the starting bit position of the second rate-matched bits of the n-th transmission is differently determined according to whether the symbol on which the (n-1)-th transmission is performed is the FD symbol or the HD symbol — S202

EP 4 693 968 A2

**Description**

TECHNICAL FIELD

This disclosure relates to a method of operating a device in a wireless communication system and a device using the method.

BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR or post-NR wireless communication systems, full duplex (FD) operation can be performed. When performing FD operation, a device can perform downlink reception and uplink transmission simultaneously in a given time resource. Half duplex (HD) operation differs from HD in that only either downlink reception or uplink transmission can be performed in a specific time resource. For FD operation, i) in the same time resource, some frequency resources may be allocated to downlink subbands and other frequency resources to uplink subbands (this may be referred to as subband FD, or subband-wise full duplex (SBFD)), or ii) frequency resources may be allocated that can be used for both downlink reception and uplink transmission in the same time resource. (this may be referred to as spectrum shared FD, or spectrum-sharing full duplex (SSFD)).

To improve communication reliability and/or coverage, certain channels may be transmitted repeatedly. For example, the physical uplink shared channel (PUSCH), which is an uplink data channel, may be transmitted repeatedly across multiple slots.

However, when transmitting a PUSCH, the size of a transport block (TB) transmitted through the PUSCH is determined based on the number of physical resource blocks (PRBs) allocated for one PUSCH transmission. If the time-domain resources used for repeated PUSCH transmission are mixed with FD resources (e.g., FD slots, FD symbols) that operate as FDs and resources that do not operate as FDs (non-FD slots, non-FD symbols), for example, HD resources (HD slots, HD symbols) that operate as HDs, the number of frequency-domain resources (e.g., PRBs) used for PUSCH transmission in each time resource may be different. Accordingly, the number of rate-matched coded bits that can be transmitted in each time resource may be different for each time resource (e.g., slot).

Considering this, if the TB size is determined according to the number of available PRBs in a non-FD slot, encoded bits that cannot be transmitted may occur even if PUSCHs corresponding to various redundancy version (RV) values are transmitted.

On the other hand, if the TB size is determined based on the number of available PRBs in the FD slot, data may be transmitted unnecessarily and repeatedly.

**DISCLOSURE**

**TECHNICAL PROBLEM**

The technical problem that the present disclosure aims to solve is to provide a method of operating a device in a wireless communication system and a device that uses the method.

**TECHNICAL SOLUTION**

In one aspect, provided is a method of operating a user equipment (UE) in a wireless communication system. The method includes generating encoded bits and transmitting the encoded bits in a plurality of symbols through an uplink channel. // The plurality of symbols include i) a full duplex (FD) symbol capable of simultaneously performing an uplink operation and a downlink operation using different frequency bands, and ii) a half duplex (HD) symbol capable of performing an uplink operation or a downlink operation, and in each of the plurality of symbols, different rate-matched bits among the encoded bits are transmitted according to an RV (redundancy version) value. The rate-matched bits transmitted in each symbol have a starting bit position according to the RV value in the encoded bits, and when transmitting the first rate-matched bits by the (n-1)-th transmission (the n is a natural number) among the rate-matched bits and transmitting the second rate-matched bits by the n-th transmission, a starting bit position of the second rate-matched bits of the n-th transmission is determined differently depending on whether a symbol on which the (n-1)-th transmission is performed is the FD symbol or the HD symbol.

In another aspect, provided are a UE, an apparatus and computer readable medium (CRM) performing the method.

In still another aspect, provided are a method of operating a base station, and a base station using the method. According to the method of operating the base station, A base station receives encoded bits in a plurality of symbols through an uplink channel, wherein the plurality of symbols include i) a full duplex (FD) symbol capable of simultaneously performing uplink operations and downlink operations using different frequency bands, and ii) a half duplex (HD) symbol capable of performing uplink operation or downlink operation, and receives different rate-matched bits among the encoded bits according to an RV (redundancy version) value in each of the plurality of symbols. The rate-matched bits received in each symbol have a starting bit position according to the RV value in the encoded bits, and when the first rate-matched bits are received by the (n-1)-th reception (the n is a natural number) among the rate-matched bits and the second rate-matched bits are received by the n-th reception, a starting bit position of the second rate-matched bits of the n-th reception is determined differently depending on whether the symbol for which the (n-1)-th reception is performed is the FD symbol or the HD symbol.

### ADVANTAGEOUS EFFECTS

According to the method according to the present disclosure, when PUSCH repetition transmission is transmitted across different types of slots in the time domain, such as slots where FD slots and HD slots coexist, efficient transmission without loss is possible even if the number of rate-matched coded bits that can be transmitted in each slot is different.

### BRIEF DESCRIPTION OF THE DRAWINGS

FIG. 1 illustrates a wireless communication system to which the present disclosure can be applied.

FIG. 2 is a block diagram showing the radio protocol architecture for the user plane.

FIG. 3 is a block diagram showing the radio protocol structure for the control plane.

FIG. 4 illustrates the system structure of a next-generation radio access network (NG-RAN) to which NR is applied.

FIG. 5 illustrates the functional division between NG-RAN and 5GC.

FIG. 6 illustrates a frame structure that can be applied in NR.

FIG. 7 illustrates the slot structure of an NR frame.

FIG. 8 illustrates the CORESET.

FIG. 9 shows an example of a frame structure for a new wireless access technology.

FIG. 10 illustrates the structure of a self-contained slot.

FIG. 11 illustrates physical channels and typical signal transmission.

FIG. 12 is an example of PUSCH repetition type A.

FIG. 13 is an example of PUSCH repetition type B.

FIG. 14 shows examples of how to apply full duplex within an intra-carrier.

FIG. 15 shows an example in which a time resource operating in half duplex (HD) and a time resource operating in full duplex (FD) such as SBFD or SSFD exist together.

FIG. 16 shows examples of first time resource, second time resource, first frequency resource and second frequency resource.

FIG. 17 shows another example of a first time resource, a second time resource, a first frequency resource, and a second frequency resource.

FIG. 18 illustrates frequency resources allocated for PUSCH transmission.

FIG. 19 illustrates bits transmitted through each PUSCH in PUSCH repetition transmission.

FIG. 20 illustrates a method of operating a UE in a wireless communication system.

FIG. 21 illustrates the signaling process and operation between a base station and a UE when applying the method of FIG. 20.

FIG. 22 illustrates a wireless device that can be applied the present specification.

FIG. 23 shows an example of a signal processing module structure.

FIG. 24 shows another example of the structure of a signal processing module in a transmission device.

FIG. 25 shows an example of a wireless communication device according to an implementation example of the present disclosure.

FIG. 26 shows another example of a wireless device.

FIG. 27 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

The following figures are intended to illustrate specific examples of the present specification. The names of specific devices and the names of specific signals/messages/fields depicted in the figures are provided for illustrative purposes only, and the technical features of this specification are not limited to the specific names used in the figures.

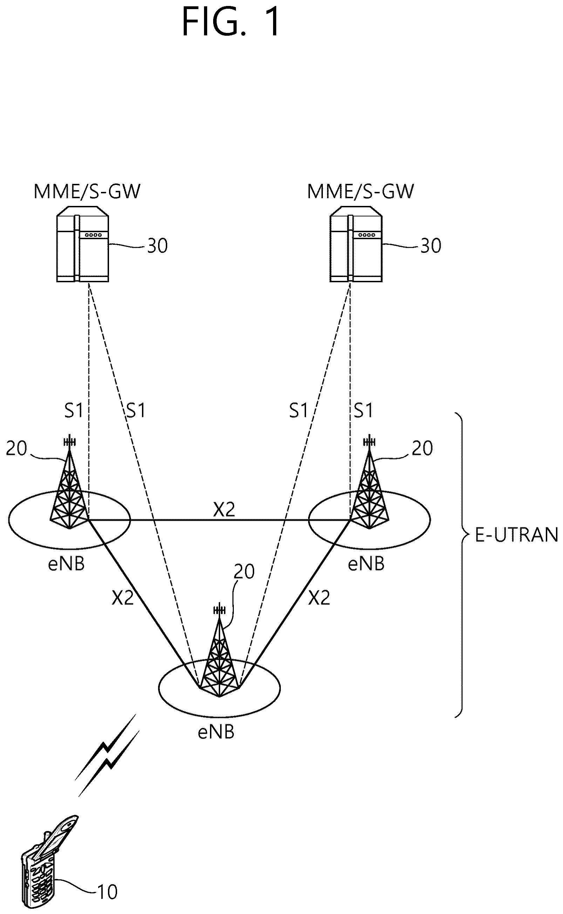

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

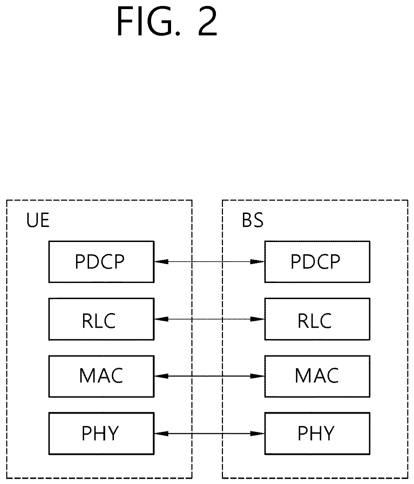

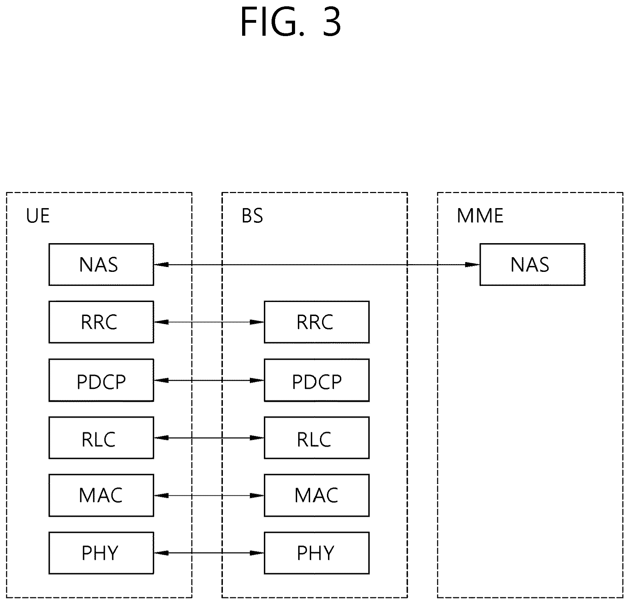

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

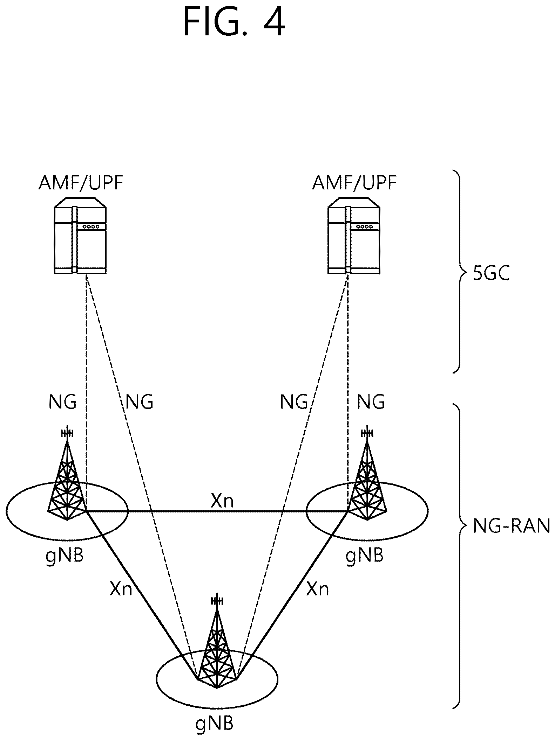

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

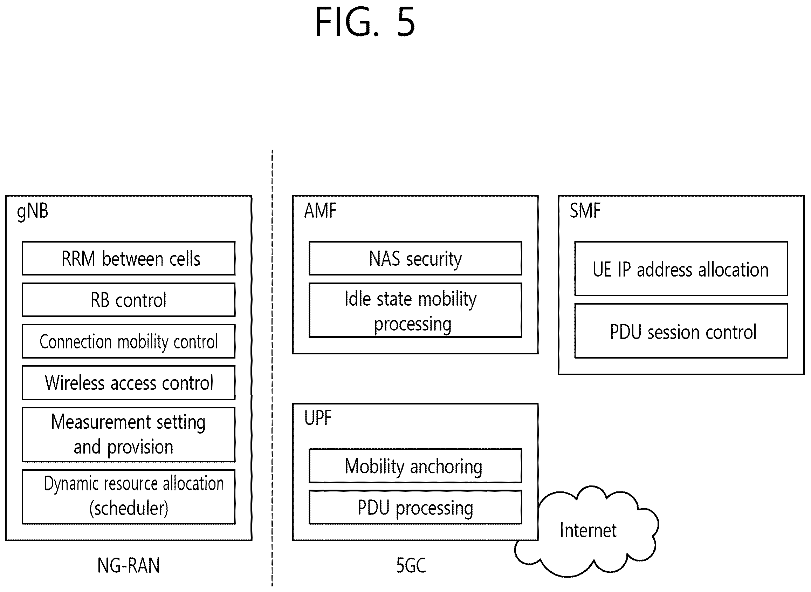

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

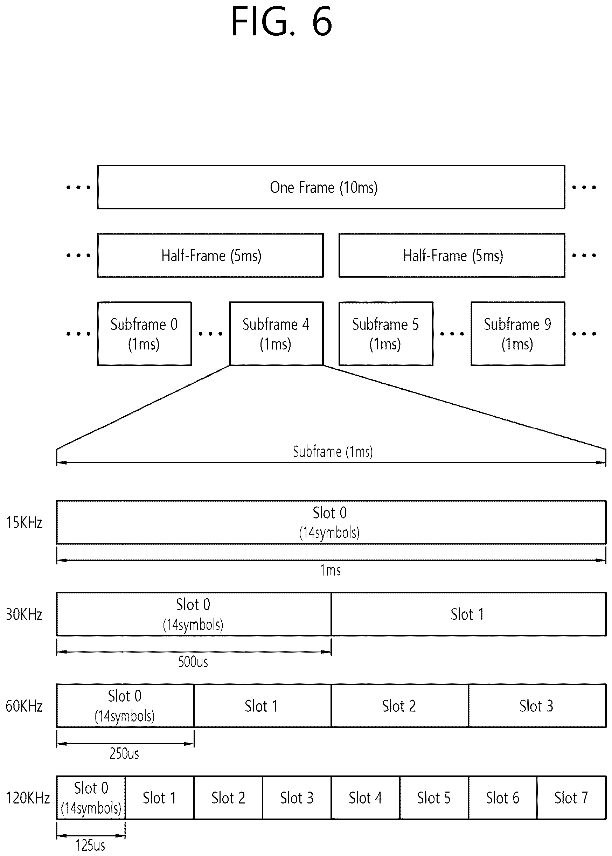

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix (CP) |
|---|---|---|
| 0 | 15 | Normal |
| 1 | 30 | Normal |
| 2 | 60 | Normal / Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |

(continued)

| μ | $N^{slot}_{symb}$ | $N^{frame,\mu}_{slot}$ | $N^{subframe,\mu}_{slot}$ |
|---|---|---|---|
| 3 | 14 | 80 | 8 |
| 4 | 14 | 160 | 16 |

FIG. 6 illustrates a case of μ=0, 1, 2, 3.

Table 2-1 below illustrates that the number of symbols per slot, the number of slots per frame, and the number of slots per subframe vary depending on the SCS, in case of using an extended CP.

[Table 2-1]

| SCS(15*2μ) | $N^{slot}_{symb}$ | $N^{frame,\mu}_{slot}$ | $N^{subframe,\mu}_{slot}$ |
|---|---|---|---|
| 60KHz (μ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

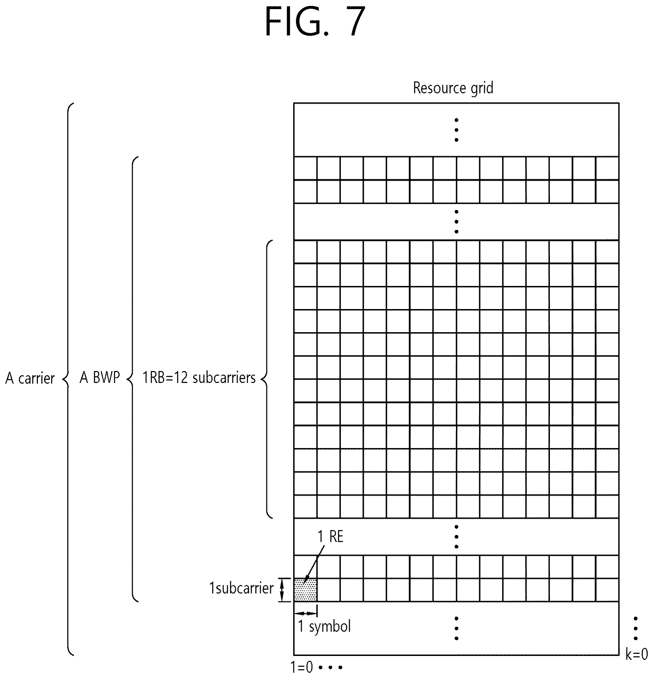

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

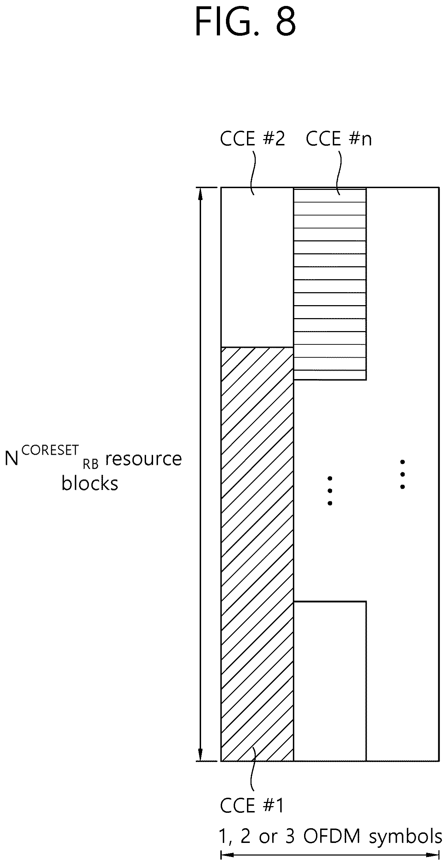

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

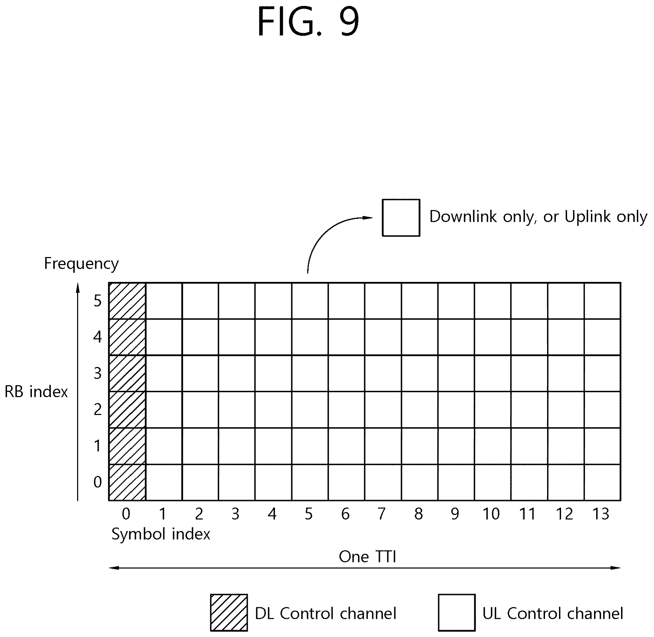

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

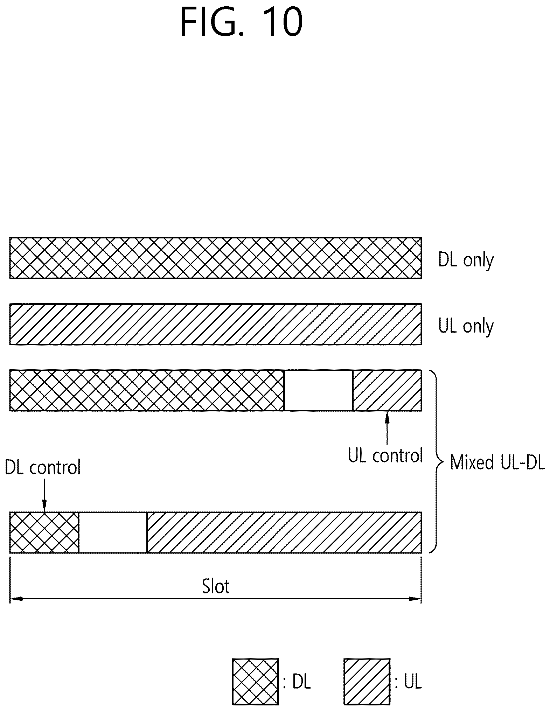

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

$$DL\ region + Guard\ period\ (GP) + UL\ control\ region,$$

$$DL\ control\ region + GP + UL\ region.$$

DL region: (i) DL data region, (ii) DL control region + DL data region.
UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

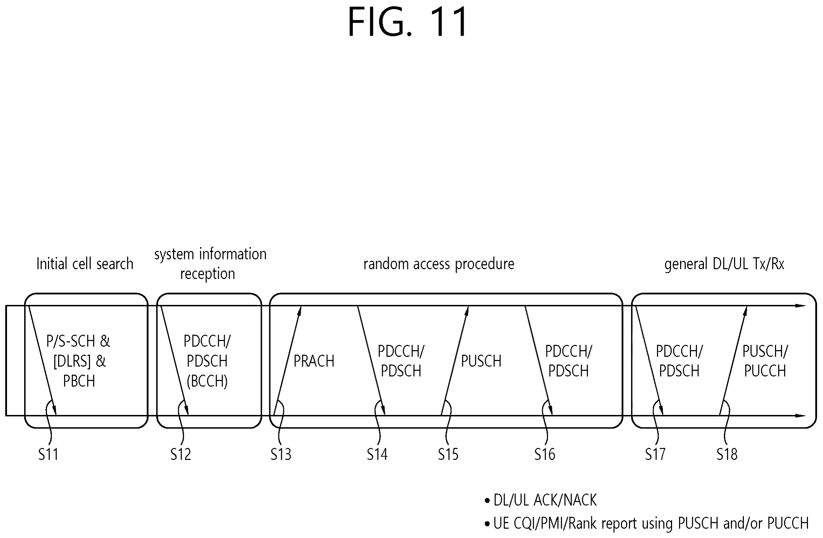

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

<PUSCH Repetitions>

Standard specifications (e.g., NR Rel-15/16) introduced PUSCH repetition types A and B. Depending on the PUSCH repetition type, transmissions can be performed as follows:

1) PUSCH Repetition Type A

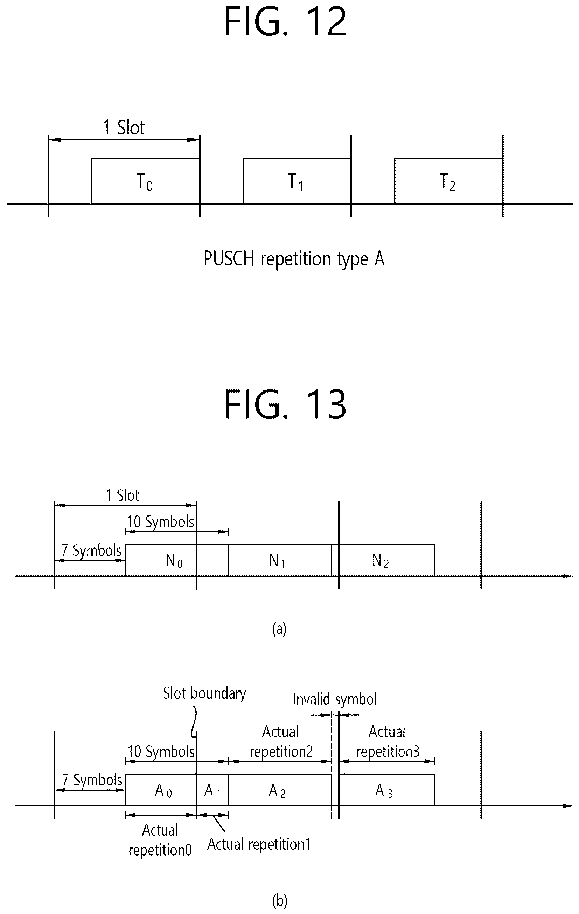

FIG. 12 illustrates an example of PUSCH repetition type A.

Referring to FIG. 12, PUSCH repetition type A is a slot-based PUSCH repetition transmission. As illustrated in FIG. 12, repetitions are performed for each slot with the same PUSCH transmission start symbol position and PUSCH transmission symbol length. If invalid symbols that cannot be used for PUSCH transmission exist among the symbol resources constituting a specific PUSCH repetition, the transmission of the corresponding PUSCH repetition is dropped and not performed.

For example, when four PUSCH repetitions (Rep0, Rep1, Rep2, and Rep3) are performed in slots N, N+1, N+2, and N+3 (one PUSCH repetition is transmitted in each slot), if the symbol resources constituting Rep1 contain invalid symbols, Rep1 transmission is dropped, and only Rep0, Rep2, and Rep3 transmissions are performed. Therefore, the actual number of repetitions performed may be less than the configured repetition number. In this example, the configured repetition number may be 4, but the actual number of repetitions performed may be 3.

For PUSCH repetition type A, frequency hopping can be configured for the UE via higher-layer parameters. One of two frequency hopping modes can be configured:

i) Intra-slot frequency hopping is applicable to single-slot and multi-slot PUSCH transmissions.
ii) Inter-slot frequency hopping is applicable to multi-slot PUSCH transmission.

2) PUSCH Repetition Type B

FIG. 13 illustrates an example of PUSCH Repetition Type B.

Referring to FIG. 13, PUSCH Repetition Type B repeats the symbol length in units of the actual PUSCH transmission. For example, as shown in (a) of FIG. 13, if a single PUSCH is transmitted over 10 symbols, PUSCH repetition is performed in units of 10 consecutive symbols. In this case, repetition that determines PUSCH repetition transmission time resources without considering slot boundaries, invalid symbols, etc. is called nominal repetition. (a) of FIG. 13 illustrates an example where three nominal repetitions (denoted as $N_0$, $N_1$, and $N_2$) are configured.

However, in the case of actual PUSCH repetition, a single PUSCH cannot be transmitted while including slot boundaries. That is, if a nominal PUSCH transmission includes a slot boundary (e.g., $N_0$ or $N_2$ in (a) of FIG. 13), two actual repetitions are performed with the slot boundary as the boundary, as shown in (b) of FIG. 13. For example, nominal repetition $N_0$ is performed with two actual repetitions, $A_0$ and $A_1$, with the slot boundary as the boundary.

Furthermore, a PUSCH transmission can only be performed using consecutive symbols. If an invalid symbol exists in the time resource where a PUSCH repetition should be transmitted, an actual repetition is formed using consecutive symbols, with the invalid symbol as the boundary. For example, if symbols #0 to #9 constitute a nominal repetition and symbols #3 to #5 are invalid symbols, symbols #0 to #2 and symbols #6 to #9, excluding the invalid symbol, constitute one actual repetition each.

Invalid symbols may include the following symbols:

i) Downlink symbols configured by the semi-static TDD UL-DL configuration,
ii) Invalid symbol patterns configured by RRC (may be configured by the Invalid Symbol Pattern Indicator),
iii) SSB symbols configured by SIB1 (system information block 1), SSB symbols configured by 'ServngCellConfig-Common',
iv) Symbols for PDCCH for SIB1,
v) Invalid symbols for DL-UL switching configured by RRC.

If a single actual repeated resource contains symbols that cannot be used for PUSCH transmission (e.g., DL symbols indicated by DCI format 2_0), the corresponding actual repeated transmission is dropped and not performed.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

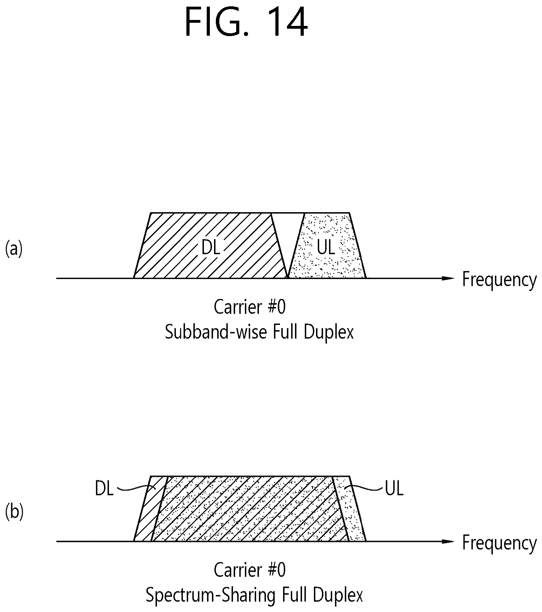

FIG. 14 shows examples of how to apply full duplex within an intra-carrier.

Referring to FIG. 14, the full duplex method includes subband-wise full duplex (hereinafter simply referred to as subband full duplex or SBFD) as shown in (a) of FIG. 14 and spectrum sharing full duplex (hereinafter simply referred to as SSFD as shown in (b) of FIG. 14 may be considered.

In the case of SBFD, DL and UL transmission and reception can be performed simultaneously using different frequency resources within the same carrier (e.g., carrier #0). That is, DL and UL operations can be performed simultaneously using different frequency resources within the same time resource.

In the case of SSFD, DL and UL transmission and reception can be performed within the same carrier (e.g., carrier #0) using the same frequency resources or at least partially overlapping frequency resources. That is, DL and UL operations can be performed simultaneously using the same or partially overlapping frequency resources within the same time resource.

This full duplex (FD) operation can also be used in combination with the existing half duplex (HD) operation. For example, among time resources used for existing half duplex based TDD operation, some time resources may be used for full duplex operation. SB-FD or SSFD operations can be performed on time resources that perform full duplex operations.

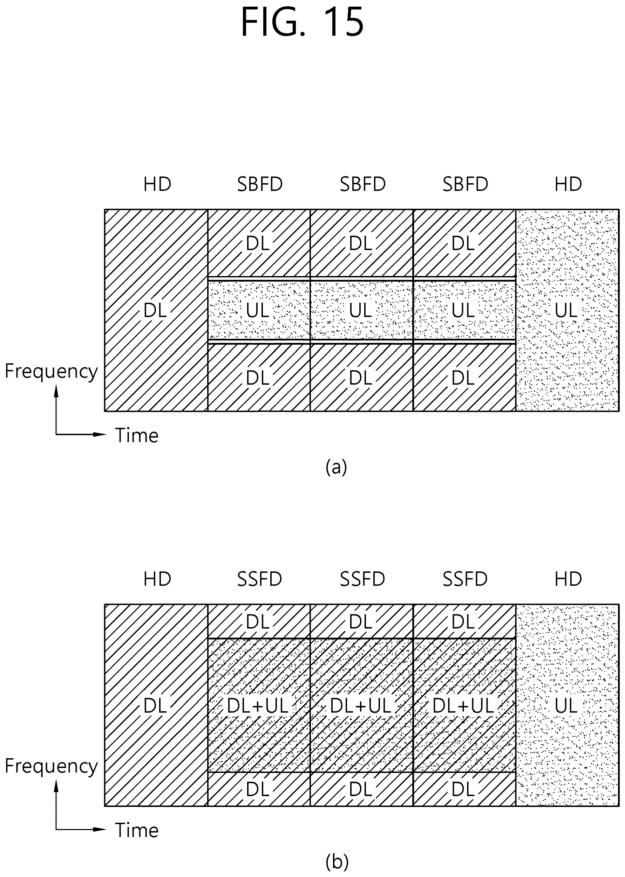

FIG. 15 shows an example in which a time resource operating in half duplex (HD) and a time resource operating in full duplex (FD) such as SBFD or SSFD exist together.

In (a) of FIG. 15, some time resources operating as SBFD are indicated as SBFD, and time resources operating as HD are indicated as HD. In (b) of FIG. 15, some time resources operating as SSFD are indicated as SSFD, and time resources operating as HD are indicated as HD. The unit of time resource may be, for example, a subframe, a slot or a symbol.

In time resources operating as SBFD, some frequency resources are used as DL resources, and other frequency resources are used as UL resources. Between the DL frequency resource and the UL frequency resource, there may be a guard sub-band that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource (symbol resource) operating in half duplex is referred to as an HD slot (HD symbol), and a slot resource (symbol resource) operating in SBFD and a slot resource (symbol resource) operating in SSFD are referred to as an SBFD slot (SBFD symbol) and an SSFD slot (SSFD symbol), respectively. In addition, an SBFD slot (SBFD symbol) and an SSFD slot (SSFD symbol) are collectively referred to as an FD slot (FD symbol).

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station can perform full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on this discussion, the disclosure proposes a PUSCH transmission method of a UE when one PUSCH transmission includes both SBFD symbols and non-SBFD symbols during intra-carrier full duplex operation.

In the following, the term network may be interpreted as gNB or CU/DU. The term UE(terminal) may also be interpreted as a mobile terminal (MT) of an IAB node or a MT of a network-controlled repeater (NCR-MT).

A. Characteristics of DL/UL time/frequency resources for SBFD and SSFD operation

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

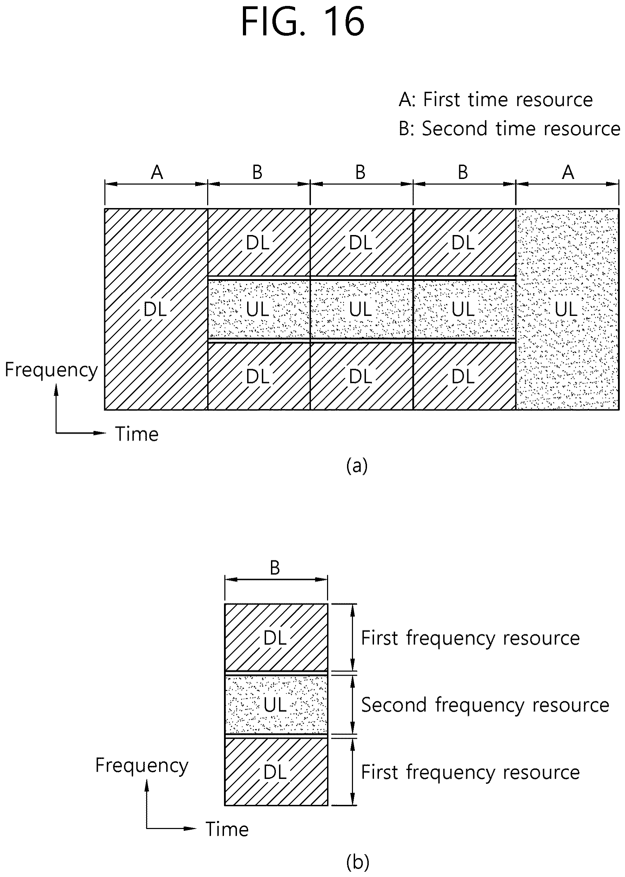

FIG. 16 shows examples of a first time resource, a second time resource, a first frequency resource, and a second frequency resource.

Referring to (a) of FIG. 16, in the first time resource (represented by A), the device operates in HD. In the second time resource (represented by B), for example, the device can operate as SBFD. In the first time resource, the resource indicated by DL corresponds to the above-described 1-1 time resource, and the resource indicated by UL corresponds to the above-described 1-2 time resource.

Referring to (b) of FIG. 16, in the second time resource, the frequency resource operating as DL corresponds to the above-described first frequency resource, and the frequency resource operating as UL corresponds to the above-described second frequency resource.

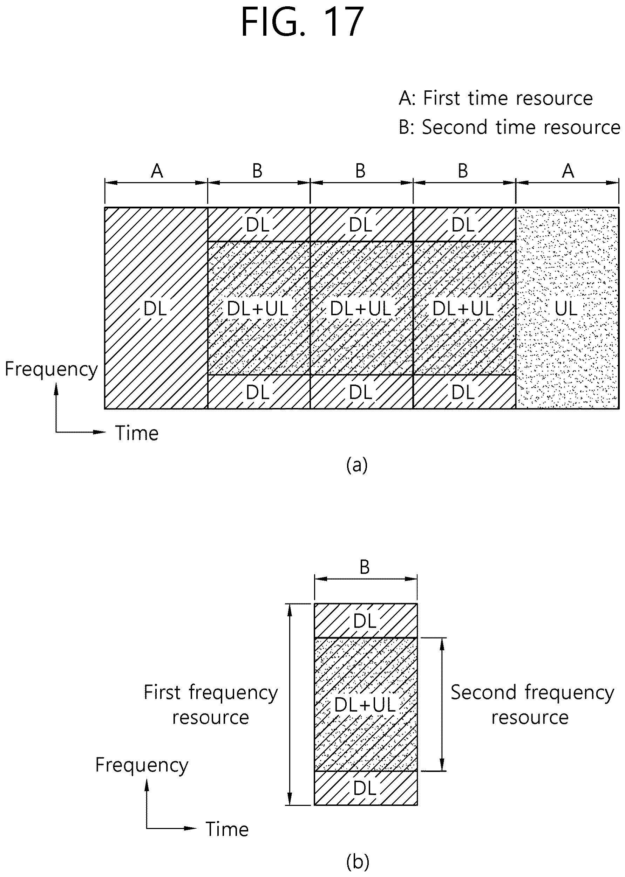

FIG. 17 shows another example of a first time resource, a second time resource, a first frequency resource, and a second frequency resource.

Referring to (a) of FIG. 17, in the first time resource (denoted by A), the device operates as a half duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 17, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. In this case, the first frequency resource may comprise a plurality of discontiguous sets (e.g., two), each of which may comprise a contiguous frequency resource. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. In this case, the second frequency resource may comprise a plurality of discontiguous sets (e.g., two), each of which may comprise a contiguous frequency resource. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of the carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (SBFD symbol), both DL and UL resources may exist in that time resource. In this case, if there is no UL signal for the base station to receive in that time resource, the base station can only perform DL transmissions. In SBFD resources, DL transmission is only within the DL subband. Therefore, even if there is no UL signal transmitted in the UL subband, DL transmission can only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it can consider a fallback to TDD operation where DL or UL operation is performed over the full band, rather than SBFD operation over DL/UL subbands.

The UE can perform the same TDD operation (half duplex operation) as an existing UE in resources that are not determined to be SBFD symbols. That is, only DL or UL operations can be performed using all frequency resources of the cell.

The UE can receive SBFD symbol configuration information from the network. Based on this, it can determine a specific symbol as an SBFD symbol or a non-SBFD symbol.

i) If the UE determines a specific symbol as a non-SBFD symbol, it can perform legacy operations on that symbol (or determines that it will perform legacy operations).

ii) If the UE determines a specific symbol as an SBFD symbol, it determines that symbol is capable of performing SBFD operations from the cell's perspective.

The UE may not receive configuration information for SBFD symbols from the network. In this case, i) the UE may determine all symbols as non-SBFD symbols. Therefore, the UE can operate as in legacy TDD for all symbols.

Or ii) if the UE does not receive configuration information for SBFD symbols from the network, the UE may determine all symbols as SBFD symbols.

If a UE determines a specific symbol to be an SBFD symbol, i) the UE can generally perform DL reception within the DL subband and UL transmission within the UL subband during the time resources determined to indicate that the cell operates in SBFD. ii) Additionally, the base station may consider performing only DL transmission or UL reception during the time resources determined to indicate that the cell operates in SBFD, or, if necessary, performing DL transmission or UL reception across the entire band (capable of receiving DL or UL scheduling).

The UE may determine the UL and DL subbands based on network configuration.

i) The UE may receive information about the UL and DL subbands from the network and determine the frequency resources constituting the UL and DL subbands from this information.

ii) Alternatively, the UE may receive only information about the UL subbands from the network and determine the frequency resources constituting the UL subbands from this information. In this case, within the frequency resources constituting the system BW, the remaining frequency resources, excluding those configured/determined as UL subbands, can be determined as DL subbands. Additionally, if the UE is configured with frequency resources constituting guard subbands, the remaining frequency resources, excluding those configured/determined as UL subbands and guard subbands, can be determined as DL subbands.

iii) Alternatively, the UE may receive only DL subband information from the network and determine the frequency resources constituting the UL subband from this. In this case, within the frequency resources constituting the system BW, the remaining frequency resources, excluding those configured/determined as DL subbands, can be determined as UL subbands. Additionally, if the UE is configured with frequency resources constituting guard subbands, the remaining frequency resources, excluding those configured/determined as DL subbands and guard subbands, can be determined as UL subbands.

In the present disclosure, a time resource operating as SBFD or an SBFD symbol may refer to the aforementioned 'second time resource' described above. Additionally, in this disclosure, a time resource operating in TDD, a time resource operating in HD, a TDD symbol, or an HD symbol may refer to the aforementioned 'first time resource'.

The DL subband mentioned in this disclosure may refer to the aforementioned 'first frequency resource. ' Additionally, the UL subband mentioned in this disclosure may refer to the aforementioned 'second frequency resource.'

<B. PUSCH/PDSCH Transmission/Reception Resources Considering SBFD Operation>

When a UE is scheduled for PUSCH transmission (e.g., DG (dynamic grant)-PUSCH, CG (configured grant)-PUSCH, TBoMS (TB processing over multiple slots), etc.) via RRC configuration and/or DCI signaling from the network, some or all of the frequency resources allocated for the PUSCH transmission may not be included in the UL subband.

For example, the network expects the UE to receive the CG-PUSCH using non-SBFD symbols and configures the CG-PUSCH reception frequency resources for the UE. However, a specific CG-PUSCH transmission symbol may include an SBFD symbol.

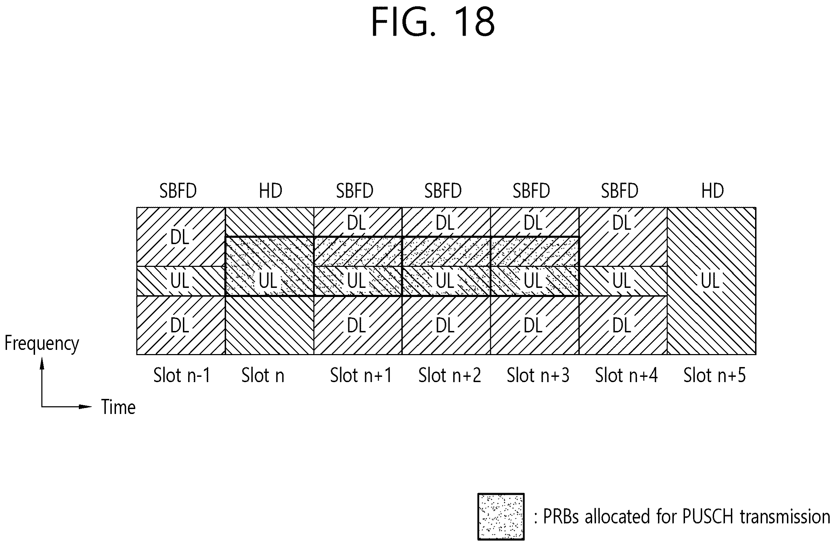

FIG. 18 illustrates frequency resources allocated for PUSCH transmission.

Referring to FIG. 18, when a base station schedules a UE for repeated PUSCH transmission or TBoMS transmission using multiple slot resources, SBFD symbols may be included in the PUSCH and TBoMS transmission symbols transmitted through the multiple slots. For example, frequency resources (PRBs) for PUSCH transmission may be allocated from slots n to n+3. Slot n may consist of non-SBFD symbols, while slots n+1 to n+3 may consist of SBFD symbols.

In this case, the symbol resources used by the UE to transmit a specific PUSCH may include SBFD symbols. Furthermore, some or all of the frequency resources allocated to the UE for PUSCH transmission may not be included in the UL subband, as shown in slots n+1 to n+3.

When performing a specific PUSCH transmission, if the symbol resources used for PUSCH transmission include SBFD symbols, the UE may perform the PUSCH transmission using all or some of the frequency resources within the UL subband among the frequency resources allocated for PUSCH transmission.

More specifically, PUSCH transmission frequency resources can be determined as follows, and PUSCH transmission can be performed using the corresponding frequency resources.

  i) Among the PRB resources allocated for PUSCH transmission, only PRB resources within the UL subband can be determined as PRB resources for PUSCH transmission.

  ii) Among the RBG (Resource Block Group) resources allocated for PUSCH transmission, only RBG resources whose PRBs constituting the RBG are all within the UL subband can be determined as RBG resources for PUSCH transmission.

In this way, when a UE performs PUSCH transmission using all or part of the frequency resources within the UL subband among the frequency resources allocated for PUSCH transmission, the actual PUSCH transmission may be performed using a smaller number of PRB resources compared to the PRB resources allocated for PUSCH transmission.

Meanwhile, the transport block (TB) size (TBS) for PUSCH transmission can be determined based on the number of PRBs allocated (e.g., through the FDRA field of the UL grant indicated through DCI).

  i) PUSCH scheduled by random access response (RAR) UL grant, ii) PUSCH scheduled by fallback RAR UL grant, iii) PUSCH scheduled by DCI format 0_0 with CRC scrambled by C-RNTI, MCS-C-RNTI, TC-RNTI, CS-RNTI, iv) PUSCH scheduled by DCI format 0_1 or DCI format 0_2 with CRC scrambled by C-RNTI, MCS-C-RNTI, CS-RNTI, v) In case of CG-PUSCH or message A PUSCH transmission, if $I_{MCS}$ is 0 or greater and 27 or less ($0 \leq_{MCS} \leq 27$) and transform precoding is enabled, the UE first determines the TBS as follows, by determining the number of resource elements (REs) in the slot ($N_{RE}$, which can be referred to as the total number of REs allocated to the PUSCH) is determined.

To this end, the UE first determines the number of REs allocated to the PUSCH within a PRB ($N'_{RE}$) as follows:

[Equation 1]

$$N'_{RE} = N^{RB}_{sc} \cdot N^{sh}_{symb} - N^{PRB}_{DMRS} - N^{PRB}_{oh}$$

In Equation 1, $N^{RB}_{sc} = 12$, which is the number of subcarriers in the frequency domain of a physical resource block (PRB).

$N^{sh}_{symb}$ is the number of symbols L of the PUSCH allocation.

$N^{PRB}_{DMRS}$ is the number of REs for DM-RS per PRB in the allocated duration including the overhead of the DM-RS CDM groups without data.

$N^{PRB}_{oh}$ is an overhead configured by the higher layer parameter xOverhead of PUSCH-ServingCellConfig. If $N^{PRB}_{oh}$ is not configured, $N^{PRB}_{oh}$ is considered 0.

The UE determines the total number of REs ($N_{RE}$) allocated to PUSCH as follows.

For TBoMS, $N_{RE}=N*min(156, N'_{RE})\cdot n_{PRB}$, where $n_{PRB}$ is the total number of PRBs allocated to the UE and N is the number of slots used for TBS determination as indicated by 'numberOfSlotsTBoMS'. Otherwise, $N_{RE}=min(156, N'_{RE})\cdot n_{PRB}$.

For example, the UE may obtain an unquantized intermediate variable ($N_{info}$) based on the $N_{RE}$, the modulation order ($Q_m$) determined based on modulation and codign scheme field ($I_{MCS}$), target code rate (R), number of layers (v), etc. and then determine the TBS based on the quantized intermediate number of information bits ($N'_{info}$) obtained according to the value of $N_{info}$.

For example, $N_{info}$ can be obtained by the following equation.

[Equation 1-1]

$$N_{info} = N_{RE} \cdot R \cdot Q_m \cdot v$$

If $N_{into}$ is less than or equal to a certain value (e.g., 3824), the quantized intermediate number $N'_{info}$ of information bits can be obtained as follows.

[Equation 1-2]

$$N'_{info} = max\left(24, 2^n \cdot \left\lfloor \frac{N_{info}}{2^n} \right\rfloor\right), \text{ where } n = max\left(3, \lfloor log_2(N_{info}) \rfloor - 6\right)$$

After that, find the closest TBS that is not less than $N'_{info}$ in the table below.

[Table 5]

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |

(continued)

| Index | TBS | Index | TBS | Index | TBS | Index | TBS |
|---|---|---|---|---|---|---|---|
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

If $N_{info}$ is greater than a certain value (e.g., 3824), the quantized intermediate number $N'_{info}$ of information bits can be obtained as follows.

[Equation 1-3]

$$N'_{info} = max\left(3840, 2^n \times round\ \left(\frac{N_{info}-24}{2^n}\right)\right), \text{where}\ n = \lfloor log_2(N_{info} - 24)\rfloor - 5$$

At this time, TBS can be determined as shown in Table 6 below according to the target code rate R and the value of N'info.

[Table 6]

$$
\text{if } R \leq 1/4
$$

$$TBS = 8 \cdot C \cdot \left\lceil\frac{N'_{info}+24}{8 \cdot C}\right\rceil - 24, \text{where}\ C = \left\lceil\frac{N'_{info}+24}{3816}\right\rceil$$

else

$$\text{if } N'_{info} > 8424$$

$$TBS = 8 \cdot C \cdot \left\lceil\frac{N'_{info}+24}{8 \cdot C}\right\rceil - 24, \text{where}\ C = \left\lceil\frac{N'_{info}+24}{8424}\right\rceil$$

else

$$TBS = 8 \cdot \left\lceil\frac{N'_{info}+24}{8}\right\rceil - 24$$

end if

For PUSCH transmission, the UE selects $E_r$ rate-matched bits from $N_r$ encoded bits for each code block transmitted on the PUSCH as follows. In the case of PUSCH transmission excluding TBoMS, consecutive $E_r$ encoded bits excluding NULL bits from the $k_0$-th encoded bits are selected as rate-matched bits. At this time, the value of $k_0$ is determined according to the RV value ($rv_{id}$) applied to the corresponding PUSCH transmission as shown in Table 7 below.

[Table 7]

| $rv_{id}$ | $k_0$ | |
|---|---|---|
| | LDPC base graph 1 | LDPC base graph 2 |
| 0 | 0 | 0 |
| 1 | $\left\lfloor \dfrac{17N_{cb}}{66Z_c} \right\rfloor Z_c$ | $\left\lfloor \dfrac{13N_{cb}}{50Z_c} \right\rfloor Z_c$ |
| 2 | $\left\lfloor \dfrac{33N_{cb}}{66Z_c} \right\rfloor Z_c$ | $\left\lfloor \dfrac{25N_{cb}}{50Z_c} \right\rfloor Z_c$ |
| 3 | $\left\lfloor \dfrac{56N_{cb}}{66Z_c} \right\rfloor Z_c$ | $\left\lfloor \dfrac{43N_{cb}}{50Z_c} \right\rfloor Z_c$ |

When the rate matching output sequence length for the r-th coded block is denoted by $E_r$, $E_r$ can be determined through the following process. $N_{cb}$ is a circular buffer of length Ncb for the r-th coded block. Zc represents the minimum value of Z in the sets of LDPC (Low density parity check) lifting sizes Z.

[Table 8]

Set $j = 0$

for $r = 0$ to $C - 1$

    if the $r$ -th coded block is not scheduled for transmission as indicated by CBGTI for DL-SCH and for UL-SCH

        $E_r = 0;$

    else

        if $j \leq C' - mod(G/(N_L \cdot Q_m), C') - 1$

            - $E_r = N_L \cdot Q_m \cdot \left\lfloor \dfrac{G}{N_L \cdot Q_m \cdot C'} \right\rfloor;$

        else

            - $E_r = N_L \cdot Q_m \cdot \left\lceil \dfrac{G}{N_L \cdot Q_m \cdot C'} \right\rceil;$

        end if

        $j = j + 1;$

    end if

end for

In Table 8 above, $N_L$ is the number of transport layers to which the transport block is mapped. $Q_m$ is the modulation order. G is the total number of coded bits that can be used for transmission of the transport block. If the DCI that schedules the transport block does not contain code block group transmission information (CBGTI), C'=C, and if the DCI that schedules the transport block contains CBGTI, C' is the number of scheduled code blocks of the transport block.

When the redundancy version number for this transmission is denoted as $rv_{id}$ ($rv_{id}$ =0,1,2, or 3), the rate matching output bit sequence $e_k$, k=0,1,2, ..., E-1 can be generated as shown in Table 9 below (the values of $rv_{id}$ and $k_0$ according to

the LDPC base graph are given as shown in Table 7 above).

[Table 9]

```
    k = 0;

    j = 0;

    while  k < E

        if  d_{(k_0+j) mod N_cb}   ≠< NULL >

            e_k = d_{(k_0+j) mod N_cb}  ;

            k = k + 1;

        end if

        j = j + 1;

    end while
```

The coded bits for each code block denoted as $d_{r0}, d_{r1}, d_{r2}, d_{r3}, \ldots, d_{r(N_r-1)}$ are passed to a rate match block, where r is the code block number and $N_r$ is the number of encoded bits in the code block with code block number r.

The total number of code blocks is represented by C, and each code block is rate-matched independently.

If the slot is the first of $N_s$ slots allocated for TBoMS transmission, $k_0$ is used as specified in Table 7 according to the $rv_{id}$ and LDPC base graph values.

If a slot is a slot other than the first slot among $N_s$ slots, $k_0$ is set to $k_0=(k'_0+H+\tau)mod N_{cb}$, where $N_s$ can be the 'numberOfSlotsTBoMS' value of the row indicated by the Time Domain Resource Allocation (TDRA) field in the DCI. $k'_0$ represents the index of the starting coded bit in the previous slot within $N_s$ slots. H is the total number of coded bits that can be used to transmit a transport block in the previous slot within $N_s$ slots assuming no UCI multiplexing. $\tau$ represents the number of filler bits skipped in the previous slot within $N_s$ slots assuming no UCI multiplexing.

After rate matching, the bits can be represented as $f_{r0}, f_{r1}, f_{r2}, f_{r3}, \ldots, f_{r(E_r-1)}$. $E_r$ is the number of rate-matched bits for code block number r.

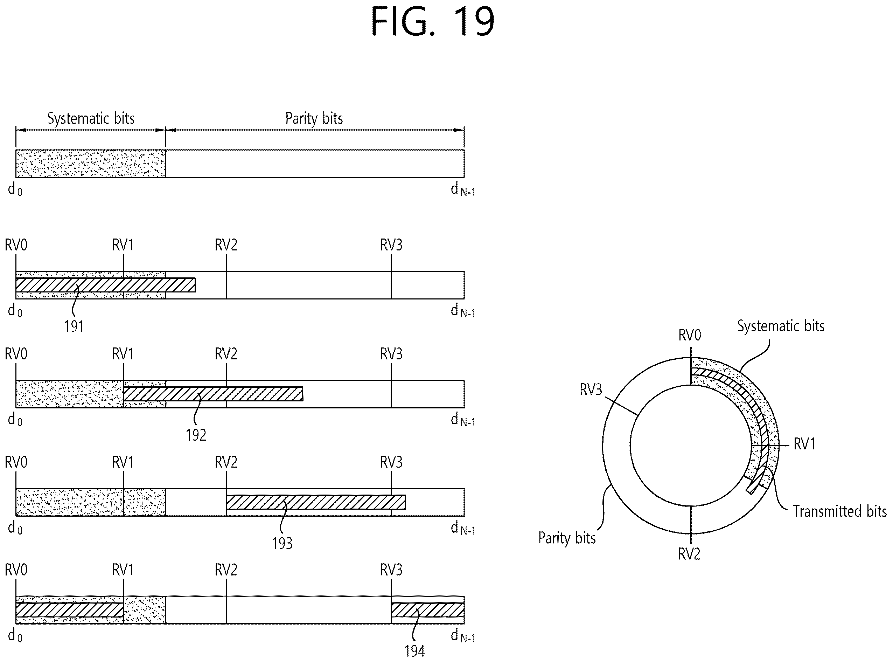

FIG. 19 illustrates bits transmitted through each PUSCH in PUSCH repetition transmission.

Referring to FIG. 19, among the encoded bits, the 'transmitted bits' (hereinafter also referred to as rate-matched bits) through each PUSCH resource are determined according to the RV (Redundancy version) value applied to each PUSCH transmission.

For example, as illustrated in FIG. 19, encoded bits composed of systematic bits and parity bits may be transmitted, in part (191), through a first PUSCH to which RV0 is applied, in part (192) through a second PUSCH to which RV1 is applied, in part (193) through a third PUSCH to which RV2 is applied, and in part (194) through a fourth PUSCH to which RV3 is applied.

At this time, the amount of 'transmitted bits' of each PUSCH is determined according to the number of PRBs used for each PUSCH transmission.

Since TB size is determined based on the number of allocated PRBs, as before, if SBFD symbols are included among the symbol resources transmitting the PUSCH, the actual PUSCH transmission may be performed using fewer PRB resources than the allocated PRB resources. In this case, a smaller number of "transmitted bits" (rate-matched bits) are transmitted on the PUSCH compared to when the PUSCH is transmitted using non-SBFD symbols.

Therefore, even when transmitting PUSCHs corresponding to various RV values through PUSCH repetition and retransmission, encoded bits may not be transmitted.

If some of the rate-matched bits corresponding to RV0 are not transmitted, these bits may be systematic bits, which could significantly impact PUSCH reception performance.

To address this issue, the method for determining TB size needs to be improved to account for the reduced number of PRBs transmitted in SBFD slots.

Furthermore, considering this, the present disclosure describes a method for rate-matching PUSCH/PDSCH transmitted and received by a UE, taking into account SBFD symbols during intra-carrier full duplex operation.

Similar to the PUSCH example, when a UE receives a specific PDSCH, if the symbol resource transmitting the PDSCH includes an SBFD symbol, the UE may perform PDSCH reception using all or part of the frequency resources within the DL subband allocated for PDSCH reception.

This disclosure assumes SBFD operation, in which a cell simultaneously performs DL and UL using different frequency resources (subbands) within the same time resource. However, the contents of this disclosure can also be applied to cells performing SSFD operation.

This disclosure assumes SBFD operation, in which a cell simultaneously performs DL and UL using different frequency resources (subbands) within the same time resource. However, the contents of the present disclosure can also be applied when a cell performs SSFD operation.

While the contents of the present disclosure are described assuming PUSCH (including TBoMS) transmission, the contents of the present disclosure can also be applied to PDSCH reception. In this case, the PUSCH and UL subbands can be interpreted as PDSCH and DL subbands, respectively.

If the time resource for a UE transmitting a PUSCH includes SBFD symbols, the UE may transmit the PUSCH using only PRB resources within the UL subband. In this case, the UE may perform PUSCH transmission using only a smaller number of PRB resources compared to the number of PRBs allocated to the UE. Alternatively, the number of PRBs used or allocated for PUSCH transmission using non-SBFD symbols may differ from the number of PRBs used or allocated for PUSCH transmission using symbols including SBFD symbols. That is, the number of PRBs used for PUSCH transmission may vary depending on the symbol type (SBFD symbol or non-SBFD symbol) of the symbol in which the PUSCH is transmitted.

When a cell operates in SBFD, for PUSCH repetition type B transmissions, only all or some of the PRBs or REGs included in the UL subband among the PRB/RBG resources allocated for a specific slot (including TBoMS) or specific nominal/actual repetitions) may be used for PUSCH transmission. Alternatively, the number of PRBs used or allocated for PUSCH transmission using non-SBFD symbols may differ from the number of PRBs used or allocated for PUSCH transmission using symbols containing SBFD symbols. (The number of PRBs used or allocated for PUSCH transmission using symbols containing SBFD symbols may be less than the number of PRBs used or allocated for PUSCH transmission using non-SBFD symbols.)

In this case, for example, in the following cases, only all or some of the PRBs or REGs included in the UL subband among the PRB/RBG resources allocated for the PUSCH transmission may be used for PUSCH transmission.

A case where at least one symbol among the symbols constituting a specific nominal/actual repetition for a PUSCH (including TBoMS) transmission or PUSCH Repetition Type B transmission in a specific slot is indicated/determined as an SBFD symbol.

A case where all symbols constituting a specific nominal/actual repetition for a PUSCH (including TBoMS) transmission or PUSCH Repetition Type B transmission in a specific slot are indicated/determined as SBFD symbols.

A case where at least one symbol among the symbols constituting a K nominal/actual repetition for a K PUSCH (including TBoMS) repetitions or PUSCH Repetition Type B transmission, or the symbols constituting a single repetition, is indicated/determined as an SBFD symbol.

A case where the UE is indicated to assume the SBFD symbols constituting a specific nominal/actual repetition for a PUSCH (including TBoMS) transmission or PUSCH Repetition Type B transmission in a specific slot are SBFD symbols or to perform transmission only using resources within the UL subband.

When the number of PRBs allocated to a UE is $n_{PRB}$, the number of PRBs actually used by the UE to transmit a PUSCH on SBFD resources may be equal to $n'_{PRB}$. Alternatively, when the number of PRBs used or allocated for PUSCH transmission using non-SBFD symbols is $n_{PRB}$, the number of PRBs used or allocated for PUSCH transmission using symbols including SBFD symbols may be $n'_{PRB}$. In this case, $n'_{PRB}$ may be equal to or less than $n_{PRB}$.

At this time, the value of $n_{PRB}$ may be specifically as follows:
It may be equal to the number of PRBs allocated for PUSCH transmission.

It may be equal to the number of PRBs allocated to be applied to a PUSCH transmitted using a non-SBFD symbol.

It is equal to the number of PRBs used by the UE for PUSCH transmission in a non-SBFD symbol.

At this time, the value of $n'_{PRB}$ may be specifically as follows:
It is equal to the number of PRBs included in the UL subband among the PRBs allocated for PUSCH transmission.

It is equal to the number of PRBs constituting the A REGs, where A is the number of REGs whose PRBs are all included in the UL subband among the RBGs allocated for PUSCH transmission.

It is equal to the number of PRBs used by the UE for PUSCH transmission in an SBFD symbol.

<5.1. TB Size Determination>

To determine the TB size transmitted via PUSCH, the UE determines the $N_{RE}$ value as follows. Here, $n_{PRB}$ may be equal to the number of PRBs allocated to the UE via the FDRA field for PUSCH transmission.

For TBoMS, $N_{RE}=N*\min(156, N'_{RE}) \cdot n_{PRB}$, where $n_{PRB}$ is the total number of PRBs allocated to the UE and N is the number of slots used for TBS determination indicated by 'numberOfSlotsTBoMS'. Otherwise, $N_{RE}=min(156, N'_{RE})\cdot n_{PRB}$.

A. Method for Determining TB Size for PUSCH Transmission

This disclosure proposes that the UE calculate the $N_{RE}$ value for determining the TB size for PUSCH transmission as follows.

Method 1. The UE may determine the PUSCH TB size based on the number of PRBs used for PUSCH transmission in the SBFD symbol.

To determine the TB size of PUSCH transmission, the UE may determine the value of $N_{RE}$ as follows.

[Equation 2]

$$N_{RE} = min(156, N'_{RE}) \cdot n_{PRB} \cdot \alpha$$

In Equation 2, the value of $\alpha$ (scaling factor) may be a positive number less than or equal to 1. More specifically, the value of $\alpha$ may be determined as follows:

Alt a. $\alpha$ may be equal to the ratio of the number of PRBs actually used for PUSCH transmission in an SBFD symbol to the number of PRBs allocated for PUSCH transmission. Alternatively, $\alpha$ may be equal to the ratio of the number of PRBs used for PUSCH transmission in an SBFD symbol to the number of PRBs used for PUSCH transmission in a non-SBFD symbol. That is, $\alpha$ may be equal to $n'_{PRB}/n_{PRB}$.

Alt b. $\alpha$ may be a value configured by the UE from the network. This value may be configured through radio resource control (RRC), media access control-control element (MAC-CE), or downlink control information (DCI) signaling, etc.

Method 2. The UE may determine the PUSCH TB size based on the average number of PRBs used for PUSCH transmission.

To determine the TB size for PUSCH transmission, the UE may determine the $N_{RE}$ value as follows:

[Equation 3]

$$N_{RE} = \frac{K_1}{K} \cdot min(156, N'_{RE}) \cdot n_{PRB} + \frac{K_2}{K} \cdot min(156, N'_{RE}) \cdot n_{PRB} \cdot \alpha$$

In Equation 3, the value of $\alpha$ can be a positive number less than or equal to 1. More specifically, the value of $\alpha$ can be determined as follows:

Alt a. $\alpha$ can be equal to the ratio of the number of PRBs actually used for PUSCH transmission in an SBFD symbol to the number of PRBs allocated for PUSCH transmission. Alternatively, $\alpha$ can be equal to the ratio of the number of PRBs used for PUSCH transmission in an SBFD symbol to the number of PRBs used for PUSCH transmission in a non-SBFD symbol. In other words, $\alpha$ can be equal to $n'_{PRB}/n_{PRB}$.

Alt b. $\alpha$ can be a value configured by the UE from the network. This value can be configured via RRC, MAC-CE, DCI signaling, etc.

In Equation 3, the value of K can represent the number of repetitions applied to PUSCH transmission.

The value of $K_2$ in Equation 3 can be determined using one of the following methods:

i) Among K PUSCH transmissions, it refers to the number of PUSCH transmissions whose symbols comprise at least one SBFD symbol. Alternatively, among K PUSCH transmissions, it refers to the number of PUSCH transmissions whose symbols comprise all SBFD symbols.

ii) Among K PUSCH transmissions, it refers to the number of PUSCH transmissions transmitted using PRBs less than the allocated $n_{PRB}$ PREs,.

iii) Among K PUSCH transmissions, it refers to the number of PUSCH transmissions transmitted using $n'_{PRB}$ PRBs.

iv) It may be equal to $K - K_1$.

In Equation 3, the value of $K_1$ may be determined using one of the following methods:

i) Among K PUSCH transmissions, it refers to the number of PUSCH transmissions whose symbols comprise at least one non-SBFD symbol. Or, among K PUSCH transmissions, it refers to the number of PUSCH transmissions in which all symbols constituting the PUSCH transmission are non-SBFD symbols.

ii) Among K PUSCH transmissions, it refers to the number of PUSCH transmissions transmitted using all allocated $n_{PRB}$s PRBs.

iii) Among K PUSCH transmissions, it refers to the number of PUSCH transmissions transmitted using $n_{PRB}$ PRBs.

iv) It may be equal to K - $K_2$.

Additionally, the TB size determination method described above can be applied under the following conditions/situations.

Condition 1. In an SBFD cell, the UE always applies the TB size determination method described above.

When the cell is operating in SBFD, the UE always applies this method. That is, even if the actual PUSCH is transmitted using only non-SBFD symbols, when the cell is operating in SBFD, the UE uses the above method to determine the $N_{RE}$ value. At this time, for example, if the UE receives information from the network regarding symbol resources that operate semi-statically in SBFD mode for a specific cell or symbol resources capable of operating in SBFD, the UE may determine that the corresponding cell is performing SBFD operation. And/or, if the UE receives UL subband (and/or DL subband) information for a specific cell from the network, the UE may determine that the corresponding cell is performing SBFD operation.

Condition 2. If the symbols constituting the first PUSCH transmission include an SBFD symbol, the TB size determination method described above is applied.

When the PUSCH is repeatedly transmitted K times (including K=1), if the symbols constituting the first PUSCH transmission among the K PUSCH transmissions include at least one SBFD symbol, the UE applies the above method (i.e., the method according to the present disclosure) to determine the $N_{RE}$ value for the PUSCH transmission. Otherwise, the UE applies the legacy method (i.e., the conventional method) to determine the $N_{RE}$ value.

Alternatively, when the PUSCH is repeatedly transmitted K times (including K=1), if all symbols constituting the first PUSCH transmission are SBFD symbols, the UE applies the method according to the present disclosure to determine the $N_{RE}$ value for the PUSCH transmission. Otherwise, the UE determines the $N_{RE}$ value using the legacy method.

Alternatively, when the PUSCH is transmitted repeatedly K times (including K=1), if the first PUSCH transmission uses $n'_{PRB}(<n_{PRS})$ PRBs, the UE determines the $N_{RE}$ value for the PUSCH transmission using the method according to the present disclosure. Otherwise, the UE determines the $N_{RE}$ value using the legacy method.

For PUSCH repetition type B, the first PUSCH transmission may refer to the first nominal repetition.

Condition 3. If the symbols constituting K PUSCH transmissions include SBFD symbols, the TB size determination method according to the present disclosure is applied.

When a PUSCH is transmitted repeatedly K times (including K=1), if at least one of the K PUSCH transmissions includes at least one SBFD symbol, the UE determines the $N_{RE}$ value for the PUSCH transmission using the method according to the present disclosure. Otherwise, the UE determines the $N_{RE}$ value using the legacy method.

When a PUSCH is transmitted repeatedly K times (including K=1), if at least one of the K PUSCH transmissions includes all SBFD symbols, the UE determines the $N_{RE}$ value for the PUSCH transmission using the method according to the present disclosure. Otherwise, the UE determines the $N_{RE}$ value using the legacy method.

Alternatively, when a PUSCH is repeatedly transmitted K times (including K=1), if at least one of the K PUSCH transmissions uses $n'_{PRB}(<n_{PRB})$ PRBs, the UE determines the $N_{RE}$ value for the PUSCH transmission using the method according to the present disclosure. Otherwise, the UE determines the $N_{RE}$ value using the legacy method.

Condition 4. The TB size determination method according to the present disclosure is applied according to network indications.

If the UE receives explicit signaling from the network to reduce/adjust the TB size, the UE determines the $N_{RE}$ value for the PUSCH transmission using the method according to the present disclosure. Otherwise, the UE determines the $N_{RE}$ value using the legacy method. This signaling may be indicated via RRC and/or DCI signaling.

If the signaling is indicated via an RRC message (information element), and the UE receives an indication to reduce/adjust the TB size, the UE may always apply the method according to the present disclosure. Alternatively, if such an indication is received and Conditions 1, 2, or 3 are additionally satisfied, the UE may apply the method according to the present disclosure.

If the signaling is indicated via DCI, and if the UE receives an indication to reduce/adjust the TB size, the UE may apply the method according to the present disclosure to the PUSCH scheduled via the indicated DCI. Alternatively, if the UE receives such an indication and the PUSCH scheduled via the DCI additionally satisfies Conditions 1, 2, or 3, the UE may apply the method according to the present disclosure to the PUSCH.

Condition 5. If the UE receives a value of $\alpha$ from the network, the TB size determination method according to the present disclosure is applied.

If the UE receives a value of $\alpha$ from the network, the UE determines the $N_{RE}$ value for PUSCH transmission using the method according to the present disclosure. Otherwise, the UE determines the $N_{RE}$ value using the legacy method. Alternatively, if this indication is received and Conditions 1, 2, or 3 are additionally satisfied, the method according to the present disclosure may be applied.

Condition 6. The TB size determination method according to the present disclosure is applied based on the indication of the symbol type (i.e., whether the symbol is an SBFD symbol or a non-SBFD symbol) on which the PUSCH is transmitted.

The UE may receive an indication of the symbol type (SBFD symbol/non-SBFD symbol) of the symbol resources for performing the PUSCH transmission from the network via DCI scheduling the PUSCH. In other words, the UE may be indicated whether the PUSCH transmission will be performed assuming an SBFD symbol or a non-SBFD symbol. If the UE is indicated to perform PUSCH transmission assuming an SBFD symbol, the UE determines the $N_{RE}$ value for the PUSCH transmission using the method according to the present disclosure. Otherwise, the UE determines the $N_{RE}$ value using the legacy method.

In this context, the SBFD/non-SBFD symbols in the above context may have the following meanings:

i) the SBFD symbol may refer to a symbol in which the UE determines that the cell is operating in SBFD based on semi-static signaling received from the network. Furthermore, the non-SBFD symbol may refer to a symbol in which the UE determines that the cell is operating in non-SBFD based on semi-static signaling received from the network. Specifically, this assumption can be applied to conditions 1 through 5 above.

ii) Alternatively, the SBFD symbol may refer to a symbol in which the UE determines that the cell is operating in SBFD based on semi-static and dynamic signaling received from the network, or a symbol in which the UL operation is performed using resources within a UL subband. the non-SBFD symbol may refer to a symbol determined by the UE to be operating in non-SBFD based on semi-static and dynamic signaling received from the network, or a symbol determined to be performing UL operation not only on resources within the UL subband but also on resources outside the UL subband.

The above method may also be applied only to PUSCH transmissions, not to TBoMS (TBoMS).

B. Method for Determining the TB Size of a TBoMS Transmission

The terminal can calculate the $N_{RE}$ value to determine the TB size for a TBoMS transmission as follows.

Method 1. The UE may determine the TB size (TBS) for TBoMS based on the number of PRBs used for TBoMS transmission in the SBFD symbol.

The UE may determine the $N_{RE}$ value to determine the TB size for a TBoMS transmission as follows:

[Equation 4]

$$N_{RE} = N * min(156, N'_{RE}) \cdot n_{PRB} \cdot \alpha$$

In Equation 4, N can represent the number of slots constituting the TBoMS, and this N value can be indicated via 'numberOfSlotsTBoMS'.

In Equation 4, the value of $\alpha$ can be a positive number less than or equal to 1. More specifically, the value of $\alpha$ can be determined as follows:

Alt a. $\alpha$ can be equal to the ratio of the number of PRBs actually used for TBoMS transmission in SBFD resources to the number of PRBs allocated for TBoMS transmission. Alternatively, $\alpha$ can be equal to the ratio of the number of PRBs used for TBoMS transmission in an SBFD symbol to the number of PRBs used for TBoMS transmission in a non-SBFD symbol. In other words, $\alpha$ can be equal to $n'_{PRB}/n_{PRB}$.

Alt b. $\alpha$ can be a value configured by the UE from the network. This value can be configured via RRC, MAC-CE, DCI signaling, etc.

Method 2. The UE may determine the TB size of the PUSCH based on the number of PRBs used for the first TBoMS transmission.

To determine the TB size for TBoMS transmission, the UE may determine the value of $N_{RE}$ as follows:

[Equation 5]

$$N_{RE} = N_1 \cdot min(156, N'_{RE}) \cdot n_{PRB} + N_2 \cdot min(156, N'_{RE}) \cdot n_{PRB} \cdot \alpha$$

In Equation 5, the value of $\alpha$ can be a positive number less than or equal to 1. More specifically, the value of $\alpha$ can be determined as follows:

Alt a. $\alpha$ can be equal to the ratio of the number of PRBs actually used for TBoMS transmission in SBFD resources to the number of PRBs allocated for TBoMS transmission. Alternatively, $\alpha$ can be equal to the ratio of the number of PRBs used for TBoMS transmission in an SBFD symbol to the number of PRBs used for TBoMS transmission in a non-SBFD symbol. In other words, $\alpha$ can be equal to $n'_{PRB}/n_{PRB}$.

Alt b. $\alpha$ can be a value configured by the UE from the network. This value can be configured via RRC, MAC-CE, DCI signaling, etc.

In Equation 5, the value of $N_2$ can be determined using one of the following methods:

i) The value of $N_2$ can represent the number of slots in which the symbols constituting the TBoMS transmission include at least one SBFD symbol among the N TBoMS transmission slots. Alternatively, it may refer to the number of slots in which all symbols constituting the TBoMS transmission are composed of SBFD symbols among N TBoMS transmission slots.

ii) The $N_2$ value may refer to the number of slots in which TBoMS is transmitted using PRBs less than the allocated $n_{PRB}$ PRBs, among N TBoMS transmission slots.

iii) The $N_2$ value may refer to the number of slots in which TBoMS is transmitted using $n'_{PRB}$ PRBs among N TBoMS transmission slots.

iv) It may be equal to $N - N_1$.

In Equation 5, the $N_1$ value may be determined using one of the following methods:

i) The $N_1$ value may refer to the number of slots in which the symbols constituting the TBoMS transmission include at least one non-SBFD symbol among N TBoMS transmission slots. Alternatively, it may refer to the number of slots in which all symbols constituting the TBoMS transmission are composed of non-SBFD symbols among N TBoMS transmission slots.

ii) The $N_1$ value represents the number of slots in which TBoMS is transmitted using all allocated $n_{PRB}$ PRBs among the N TBoMS transmission slots.

iii) The $N_1$ value represents the number of slots in which TBoMS is transmitted using $n_{PRB}$ PRBs among the N TBoMS transmission slots.

iv) It may be equal to $K - K_2$.

In this case, the slots used to determine $N_1$ and $N_2$ may be determined based on the N slots that constitute the first repetition of TBoMS when the TBoMS is transmitted repeatedly.

Method 3. The UE may determine the TB size of the PUSCH based on the average number of PRBs used for K repeated TBoMS transmissions.

To determine the TB size for TBoMS transmission, the UE determines the value of $N_{RE}$ as follows:

[Equation 6]

$$N_{RE} = \frac{M_1}{K} \cdot \min(156, N'_{RE}) \cdot n_{PRB} + \frac{M_2}{K} \cdot \min(156, N'_{RE}) \cdot n_{PRB} \cdot \alpha$$

In Equation 6, the value of $\alpha$ can be a positive number less than or equal to 1. More specifically, the value of $\alpha$ can be determined as follows:

Alt a. $\alpha$ can be equal to the ratio of the number of PRBs actually used for TBoMS transmission in SBFD resources to the number of PRBs allocated for TBoMS transmission. Alternatively, $\alpha$ can be equal to the ratio of the number of PRBs used for TBoMS transmission in an SBFD symbol to the number of PRBs used for TBoMS transmission in a non-SBFD symbol. That is, $\alpha$ can be equal to $n'_{PRB}/n_{PRB}$.

Alt b. $\alpha$ can be a value configured by the UE from the network. This value can be configured via RRC, MAC-CE, DCI signaling, etc.

The value of K can represent the number of repetitions applied to TBoMS transmission.

The value of $M_2$ can be determined using one of the following methods:

i) The $M_2$ value may refer to the number of slots in which the symbols constituting the TBoMS transmission include at least one SBFD symbol among the N*K TBoMS transmission slots when the TBoMS is transmitted repeatedly K times (including K=1). Alternatively, the M2 value may refer to the number of slots in which all symbols constituting the TBoMS transmission are SBFD symbols among the N*K TBoMS transmission slots.

ii) The $M_2$ value may refer to the number of slots in which the TBoMS is transmitted using PRBs less than the allocated $n_{PRB}$ PRBs among the N*K TBoMS transmission slots.

iii) The $M_2$ value may refer to the number of slots in which the TBoMS is transmitted using $n'_{PRB}$ PRBs among the N*K TBoMS transmission slots.

iv) The $M_2$ value may be equal to N*K - $M_1$.

In Equation 6, the $M_1$ value may be determined using one of the following methods:

i) The $M_1$ value may refer to the number of slots in which the symbols constituting the TBoMS transmission include at least one non-SBFD symbol among the N*K TBoMS transmission slots when the TBoMS is transmitted repeatedly K times (including K=1). Alternatively, the $M_1$ value may refer to the number of slots in which all symbols constituting the TBoMS transmission are non-SBFD symbols among the N*K TBoMS transmission slots.

ii) The $M_1$ value may refer to the number of slots in which the TBoMS is transmitted using all of the allocated $n_{PRB}$ PRBs among the N*K TBoMS transmission slots.

iii) The $M_1$ value may refer to the number of slots in which the TBoMS is transmitted using $n_{PRB}$ PRBs among the N*K TBoMS transmission slots.

iv) The $M_1$ value may be equal to N*K - $M_2$.

Additionally, this method can be applied to the following conditions/situations:

Condition 1. In SBFD cells, the UE always applies the TB size determination method described above.

If the cell performs SBFD operation, the UE always applies this method. That is, even if the actual TBoMS is transmitted using only non-SBFD symbols, if the cell performs SBFD operation, the UE determines the $N_{RE}$ value using the method described herein. For example, if the UE receives information from the network regarding symbol resources that semi-statically operate in SBFD mode or symbol resources capable of operating in SBFD for a specific cell, the UE may determine that the cell is performing SBFD operation. Furthermore, if the UE receives UL subband (and/or DL subband) information from the network for a specific cell, the UE may determine that the cell is performing SBFD operation.

Condition 2. If the symbol constituting the first slot of the first TBoMS transmission includes an SBFD symbol, the TB size determination method described above is applied.

When a TBoMS is transmitted repeatedly K times (including K=1), for the first slot among the N slots constituting the first TBoMS transmission, if the TBoMS transmission symbols include at least one SBFD symbol, the UE determines the $N_{RE}$ value for the TBoMS transmission using the method according to the present disclosure. Otherwise, the UE determines the $N_{RE}$ value using the legacy method.

Alternatively, when a TBoMS is transmitted repeatedly K times (including K=1), for the first slot among the N slots constituting the first TBoMS transmission, if all of the TBoMS transmission symbols include SBFD symbols, the UE determines the $N_{RE}$ value for the TBoMS transmission using the method according to the present disclosure. Otherwise, the UE determines the $N_{RE}$ value using the legacy method.

Alternatively, when TBoMS is transmitted repeatedly K times (including K=1), for the first slot among the N slots constituting the first TBoMS transmission, if the TBoMS transmission is transmitted using $n'_{PRB}$ ($<n_{PRB}$) PRBs, the UE determines the $N_{RE}$ value for the TBoMS transmission by applying the method according to the present disclosure. Otherwise, the UE determines the $N_{RE}$ value by applying the legacy method.

Condition 3. If the symbols constituting the first TBoMS transmission include an SBFD symbol, the above TB size determination method is applied.

When TBoMS is transmitted repeatedly K times (including K=1), if the symbols used for TBoMS transmission within the N slots constituting the first TBoMS transmission include at least one SBFD symbol, the UE determines the $N_{RE}$ value for the TBoMS transmission by applying the method according to the present disclosure. Otherwise, the UE determines the $N_{RE}$ value by applying the legacy method.

Alternatively, when TBoMS is transmitted repeatedly K times (including K=1), if all symbols used for TBoMS transmission in at least one slot among the N slots constituting the first TBoMS transmission are composed of SBFD symbols, the UE determines the $N_{RE}$ value for the TBoMS transmission using the method according to the present disclosure. Otherwise, the UE determines the $N_{RE}$ value using the legacy method.

Alternatively, when TBoMS is transmitted repeatedly K times (including K=1), if, among the N slots constituting the first TBoMS transmission, the TBoMS transmission is transmitted using $n'_{PRB}$ ($<n_{PRB}$) PRBs in at least one slot, the UE determines the $N_{RE}$ value for the TBoMS transmission using the method according to the present disclosure. Otherwise, the UE determines the $N_{RE}$ value using the legacy method.

Condition 4. If the symbols constituting the K TBoMS repetitive transmissions include SBFD symbols, the TB size determination method is applied.

When TBoMS is transmitted repeatedly K times (including K=1), if the symbols used for TBoMS transmission within the N*K slots constituting the TBoMS transmission include at least one SBFD symbol, the UE determines the $N_{RE}$

value for TBoMS transmission using the method according to the present disclosure. Otherwise, the UE determines the $N_{RE}$ value using the legacy method.

Alternatively, when TBoMS is transmitted repeatedly K times (including K=1), if the symbols used for TBoMS transmission within at least one slot within the N*K slots constituting the TBoMS transmission include all SBFD symbols, the UE determines the $N_{RE}$ value for TBoMS transmission using the method according to the present disclosure. Otherwise, the UE determines the $N_{RE}$ value using the legacy method.

Alternatively, when TBoMS is transmitted repeatedly K times (including K=1), for the N*K slots that constitute the TBoMS transmission, if the TBoMS transmission uses $n'_{PRB}$ ($<n_{PRB}$) PRBs in at least one slot, the UE determines the $N_{RE}$ value for the TBoMS transmission using the method according to the present disclosure. Otherwise, the UE determines the $N_{RE}$ value using the legacy method.

Condition 5. The TB size determination method is applied according to network indications.

If the UE receives explicit signaling from the network to decrease/adjust the TB size, the UE determines the $N_{RE}$ value for TBoMS transmission using the method according to the present disclosure. Otherwise, the UE determines the $N_{RE}$ value using legacy methods. This signaling may be indicated via RRC and/or DCI signaling.

If the signaling is indicated via an RRC message, the UE may always apply the method according to the present disclosure if the TB size decrease/adjustment is indicated via the indication. Alternatively, the UE may apply the method according to the present disclosure if such an indication is received and conditions 1, 2, or 3 are additionally satisfied.

If the signaling is indicated via DCI, if the TB size decrease/adjustment is indicated via the indication, the UE may apply the method according to the present disclosure to the TBoMS scheduled via the indicated DCI. Alternatively, upon receiving such an indication and if the TBoMS scheduled through such DCI additionally satisfies Conditions 1, 2, or 3, the method according to the present disclosure may be applied to the TBoMS.

Condition 6. If the UE receives a value of $\alpha$ from the network, the TB size determination method is applied.

If the UE receives a value of $\alpha$ from the network, the UE determines the $N_{RE}$ value for TBoMS transmission using the method according to the present disclosure. Otherwise, the UE determines the $N_{RE}$ value using a legacy method. Alternatively, upon receiving such an indication and additionally satisfying Conditions 1, 2, or 3, the method according to the present disclosure may be applied.

Condition 7. The TB size determination method is applied according to the indication of the symbol type (SBFD symbol/non-SBFD symbol) through which the TBoMS is transmitted.

The UE may receive an indication of the symbol type (SBFD symbol/non-SBFD symbol) of the symbol resources performing the corresponding PUSCH transmission through the DCI scheduling the TBoMS from the network. That is, the UE may be indicated to perform TBoMS transmission assuming SBFD symbols or non-SBFD symbols. If the UE is indicated to perform TBoMS transmission assuming SBFD symbols, the UE determines the $N_{RE}$ value for TBoMS transmission using the method according to the present disclosure. Otherwise, the UE determines the $N_{RE}$ value using the legacy method.

In the above, the term "SBFD/non-SBFD symbol" may have the following meanings:

i) An SBFD symbol may refer to a symbol for which the UE determines that the cell is operating in SBFD based on semi-static signaling received from the network. Furthermore, a non-SBFD symbol may refer to a symbol for which the UE determines that the cell is operating in non-SBFD based on semi-static signaling received from the network. Specifically, these assumptions can be applied to conditions 1 through 5.

ii) Alternatively, an SBFD symbol may refer to a symbol determined by the UE to operate in SBFD based on semi-static and dynamic signaling received from the network, or a symbol determined to perform UL operation through resources within the UL subband. A non-SBFD symbol may refer to a symbol determined by the UE to operate in non-SBFD based on semi-static and dynamic signaling received from the network, or a symbol determined to perform UL operation not only on resources within the UL subband but also on resources outside the UL subband.

When a cell performs SBFD operation, the UE may determine the TB size of the PUSCH/TBoMS as described above for PUSCH/TBoMS transmission. This allows the PUSCH to be transmitted by applying an appropriate TB size according to the number of PRBs in which the PUSCH/TBoMS is actually transmitted.

5.2. Rate-Matched Bits Determination

When a cell operates in SBFD, for a PUSCH transmission in a specific slot (including TBoMS) or for a specific nominal/actual repetition of PUSCH Repetition Type B, the number of PRBs used for transmission may vary for each PUSCH transmission.

In this case, the encoded bits for the PUSCH transmission may be rate-matched based on the number of PRBs available for the PUSCH transmission. Alternatively, the encoded bits for the PUSCH transmission may be rate-matched based on the number of PRBs allocated for the PUSCH transmission, but the actual PUSCH may be transmitted after puncturing the RE resources that cannot accommodate PUSCH transmission. Here, the number of PRBs allocated for PUSCH transmission may refer, for example, to the number of PRBs allocated (based on the FDRA field) by the FDRA field in the DCI scheduling the PUSCH.

This disclosure assumes that the number of PRBs used for PUSCH transmission varies depending on the symbol type (SBFD symbol or non-SBFD symbol) of the symbol through which the PUSCH is transmitted. In this case, the number of PRBs allocated for PUSCH transmission is the same. However, the number of PRBs actually used for transmission may vary depending on the PUSCH transmission. Alternatively, the number and configuration of PRBs used for PUSCH transmission may be allocated differently depending on the symbol type (SBFD symbol or non-SBFD symbol) of the symbol through which the PUSCH is transmitted.

This disclosure assumes that bits encoded for PUSCH transmission are rate-matched and transmitted based on the number of PRBs available for PUSCH transmission. That is, when a PUSCH transmission uses only some or all of the PRB resources within a UL subband, the number of rate-matched bits for the PUSCH transmission is assumed to be equal to or less than the number of rate-matched bits for the PUSCH transmission when all allocated PRB resources are used.

In this case, the number of rate-matched bits may vary depending on the number of PRB resources actually used for the transmission among the allocated PRB resources for the PUSCH transmission. Conversely, the TB size can be determined based on the number of allocated PRBs, assuming non-SBFD symbols as before. In this case, a smaller number of rate-matched bits are transmitted via the PUSCH compared to when all allocated PRB resources are used for the PUSCH transmission. Therefore, even when PUSCH transmissions corresponding to various RV values are performed through repetition and retransmission of the PUSCH, some encoded bits may not be transmitted. If some of the rate-matched bits corresponding to RV0 are not transmitted, these bits may become systematic bits, which can significantly impact PUSCH reception performance.

Considering this, the following describes how a UE determines rate-matched bits, considering the case where the number of PRBs actually used for PUSCH transmission varies depending on the PUSCH transmission in a cell operating in SBFD.

Hereinafter, "PUSCH transmission" may refer to the following:

   i) For PUSCH repetition type A, it may refer to a transmission occasion.
   ii) For PUSCH repetition type B, it may refer to an actual repetition.
   iii) For TBoMS, it may refer to a TBoMS transmission consisting of N slots.

A. Method for Determining Rate-Matched Bits for PUSCH Transmission

For PUSCH transmission, the UE selects $E_r$ rate-matched bits from among $N_r$ encoded bits for each code block transmitted on the PUSCH. For PUSCH transmissions other than TBoMS, the starting bit position selects $E_r$ consecutive encoded bits, excluding filler bits (NULL bits) from the $k_0$-th encoded bit, as rate-matched bits. The value of $k_0$ can be determined based on the RV value ($rv_{id}$) applied to the corresponding PUSCH transmission.

There are four RV values ($rv_{id}$) for existing PUSCH transmissions. The applicable RV value ($rv_{id}$) for the first transmission occasion (for PUSCH repetition type A) or the first actual repetition (for PUSCH repetition type B) of a PUSCH transmission is indicated via the DCI scheduling the PUSCH.

When PUSCH is repeatedly transmitted, four RV values are applied in a specific order for each transmission occasion/actual repetition according to the order of PUSCH transmission occasion (in case of PUSCH repetition type A) or actual repetition (in case of PUSCH repetition type B). At this time, the 0th RV value = 0, the 1st RV value = 2, the 2nd RV value = 3, and the 3rd RV value = 1, so the four RV values are applied in a cyclic shifted order of 0, 2, 3, and 1. In this embodiment, when counting RV values, the start is based on the 0th, but this is not a limitation. That is, the RV values can also be based on the 1st, in which case the 1st RV value = 0, the 2nd RV value = 2, the 3rd RV value = 3, and the 4th RV value = 1 can be expressed as such.

For a PUSCH transmission in a specific slot (a specific nominal repetition or actual repetition in case of PUSCH repetition), a method for selecting rate-matched bits of a UE is described, considering a case where all or only part of PRBs or REGs included in a UL subband among PRB/RBG resources allocated for the corresponding PUSCH transmission are used for PUSCH transmission, or a case where the number of PRBs used (or allocated) for PUSCH transmission using non-SBFD symbols is different from the number of PRBs used (or allocated) for PUSCH transmission using symbols including SBFD symbols.

When the UE selects rate-matched bits from encoded bits, the first rate-matched bits are the same as the $k_0$-th encoded bits.

For a PUSCH transmission in a specific slot (in the case of PUSCH repetition, a specific nominal or actual repetition), if all or only part of the PRBs or REGs included in the UL subband among the PRB/RBG resources allocated for the PUSCH transmission are used for the PUSCH transmission, or if the number of PRBs used (or allocated) for a PUSCH transmission using non-SBFD symbols differs from the number of PRBs used (or allocated) for a PUSCH transmission using symbols including SBFD symbols, the UE may determine the starting bit position (i.e., $k_0$) value for configuring rate-matched bits as follows:

Method 1. Increasing the number of starting positions applied in an SBFD environment.

The number of RV values ($rv_{id}$) applied to PUSCH transmission can be increased, and the interval between the $k_0$ values corresponding to each RV value can be reduced. This prevents the generation of encoded bits that are not transmitted even when fewer PRBs are used for PUSCH transmission than the number of PRBs allocated for PUSCH transmission.

To achieve this, Z RV values are defined, and corresponding $k_0$ values can exist for each RV value.

The value of Z can be determined as follows:

Alt a. A specific value can be fixed in the standard. For example, the value of Z can be greater than 4.

Alt b. The base station can configure the UE through signaling such as RRC.

Alt c. When the ratio of the number of PRBs actually used for PUSCH transmission in SBFD resources to the number of PRBs allocated for PUSCH transmission is $\alpha$, the value of Z may be equal to $4/\alpha$.

Additionally, to make $4/\alpha$ an integer, the value of Z can be equal to $\mathrm{ceil}(4/\alpha)(=\lceil 4/\alpha \rceil)$, $\mathrm{floor}(4/\alpha)(=\lfloor 4/\alpha \rfloor)$, $4 \cdot \lceil 1/\alpha \rceil$, or $4 \cdot \lfloor 1/\alpha \rfloor$.

Additionally, $\alpha$ can be equal to $n'_{PRB}/n_{PRB}$.

In this case, the number of PRBs allocated to the UE may be equal to $n_{PRB}$. The number of PRBs included in the UL subband and used for PUSCH transmission among the PRB (RBG) resources allocated for PUSCH transmission can be equal to $n'_{PRB}$.

Alternatively, the number of PRBs used (or allocated) by the UE for PUSCH transmission using non-SBFD symbols can be equal to $n_{PRB}$. The number of PRBs used (or allocated) for PUSCH transmission using symbols including SBFD symbols can be equal to $n'_{PRB}$.

The value of $k_0$ can be determined as follows:

Alt a. The $k_0$ value according to the RV value ($rv_{id}$) can be defined in the standard. For example, if the RV value consists of eight values (0, 1, ..., 7), the $k_0$ value can be defined according to the RV value as shown in Table 10. At this time, the $k_0$ value according to the RV value can be configured differently depending on the number of RVs (Z).

[Table 10]

| $rv_{id}$ | $k_0$ | |
|---|---|---|
| | LDPC base graph 1 | LDPC base graph 2 |
| 0 | 0 | 0 |
| 1 | $\left\lfloor \dfrac{9N_{cb}}{66Z_c} \right\rfloor Z_c$ | $\left\lfloor \dfrac{7N_{cb}}{50Z_c} \right\rfloor Z_c$ |
| 2 | $\left\lfloor \dfrac{17N_{cb}}{66Z_c} \right\rfloor Z_c$ | $\left\lfloor \dfrac{13N_{cb}}{50Z_c} \right\rfloor Z_c$ |
| 3 | $\left\lfloor \dfrac{25N_{cb}}{66Z_c} \right\rfloor Z_c$ | $\left\lfloor \dfrac{19N_{cb}}{50Z_c} \right\rfloor Z_c$ |
| 4 | $\left\lfloor \dfrac{33N_{cb}}{66Z_c} \right\rfloor Z_c$ | $\left\lfloor \dfrac{25N_{cb}}{50Z_c} \right\rfloor Z_c$ |
| 5 | $\left\lfloor \dfrac{45N_{cb}}{66Z_c} \right\rfloor Z_c$ | $\left\lfloor \dfrac{34N_{cb}}{50Z_c} \right\rfloor Z_c$ |
| 6 | $\left\lfloor \dfrac{56N_{cb}}{66Z_c} \right\rfloor Z_c$ | $\left\lfloor \dfrac{43N_{cb}}{50Z_c} \right\rfloor Z_c$ |
| 7 | $\left\lfloor \dfrac{61N_{cb}}{66Z_c} \right\rfloor Z_c$ | $\left\lfloor \dfrac{47N_{cb}}{50Z_c} \right\rfloor Z_c$ |

$N_{cb}$ is a circular buffer of length $N_{cb}$ for the r-th coded block. $Z_c$ represents the minimum value of Z among the sets of LDPC (Low Density Parity Check) lifting size Z.

Alt b. The $k_0$ value according to the RV value ($rv_{id}$) can be set from the network to the UE.

Specifically, the $k_0$ value according to the RV value ($rv_{id}$) can be equal to $\left\lfloor \frac{\delta_{rv_{id}} \cdot N_{cb}}{66 Z_c} \right\rfloor Z_c$ when using LDPC base graph 1, or equal to $\left\lfloor \frac{\delta_{rv_{id}} \cdot N_{cb}}{50 Z_c} \right\rfloor Z_c$ when using LDPC base graph 2. The $\delta_{rv_{id}}$ value can have different values depending on the RV value ($rv_{id}$). To this end, corresponding $\delta_{rv_{id}}$ value for each RV value ($rv_{id}$) can be set from the network to the UE. The $\delta_{rv_{id}}$ value can be set independently for LDPC base graph 1 and LDPC base graph 2.

In some embodiments, when the RV value ($rv_{id}$) = 0, the $\delta_{rv_{id}}$ value (i.e., the $k_0$ value) may always be equal to 0. Therefore, only $\delta_{rv_{id}}$ value (or $k_0$ value) for cases where the RV value ($rv_{id}$) is not 0 may be configured from the network to the UE.

In some embodiments, $k_0$ value according to RV value may be configured based on the number of RVs (Z). The UE may then apply the $k_0$ value based on the RV value corresponding to the Z value actually applied.

This configuration may be configured via RRC signaling, etc.

When these RV values and $k_0$ values based on the RV values are configured, they may be applied to each PUSCH transmission as follows. For example, when four RV values are cyclically shifted and applied in the order of 0, 2, 3, and 1, the 0th RV value is expressed as 0, the 1st RV value as 2, the 2nd RV value as 3, and the 3rd RV value as 1.

Method 1-1.

When applying Method 1 described above, specifically, when a PUSCH is transmitted repeatedly K times, Z RV values can be applied in a specific order for each PUSCH transmission, cyclically shifted. That is, the 'n mod Z'-th RV value can be applied to the n-th PUSCH transmission (repetition).

For the first PUSCH transmission, the applicable RV value ($rv_{id}$) can be indicated through the DCI scheduling the PUSCH.

Starting with the second PUSCH transmission, one of four RV values can be applied to each PUSCH transmission, depending on the combination of the RV value applied to the first PUSCH transmission and the order of the PUSCH transmissions. That is, starting with the RV value applied to the first PUSCH transmission (repetition), the RV values applied to each PUSCH transmission (repetition) are cyclically shifted in a specific order. That is, the 'n mod Z'-th RV value is applied to the n-th PUSCH transmission (repetition).

Method 1-2.

When applying Method 1 described above, specifically, when a PUSCH is repeatedly transmitted K times, the applicable RV value among Z RV values for each PUSCH transmission can be determined as follows.

For the first PUSCH transmission, the applicable RV value ($rv_{id}$) can be indicated through the DCI scheduling the PUSCH.

From the second PUSCH transmission onwards, the applicable RV value ($rv_{id}$) can be determined differently depending on the number of PRBs used in the previous PUSCH transmission, as follows.

The RV value applied to the n-th PUSCH transmission may vary depending on the number of PRBs used in the (n-1)-th PUSCH transmission. For example, if the z-th RV value is applied to the (n-1)-th PUSCH transmission and $n'_{PRB}$ PRBs are used for transmission, the ((z+1) mod Z)-th RV value may be applied for the n-th PUSCH transmission. On the other hand, if the z-th RV value is applied to the (n-1)-th PUSCH transmission and $n_{PRB}$s are used for transmission, the ((z+c) mod Z)-th RV value may be applied for the n-th PUSCH transmission.

Since the number of PRBs may be determined by the symbol type, the above expression can also be expressed as follows. If Z RV values are used and the z-th RV value is applied to the (n-1)-th PUSCH repetition, i) if the (n-1)-th PUSCH repetition is performed via SBFD symbols, the ((z+1) mod Z)-th RV value is applied to the n-th PUSCH repetition, and ii) if the (n-1)-th PUSCH repetition is performed via non-SBFD symbols, the ((z+c) mod Z)-th RV value is applied to the n-th PUSCH repetition.

In this case, the c value may be as follows:

Alt a. The c value is an integer greater than 1 and may be a fixed value.
Alt b. The c value may be a value set by the base station to the UE. This setting may be communicated to the UE via RRC signaling.
Alt c. The c value may be the same as the proposed $\alpha$ value.

As described above, the UE determines the RV value ($rv_{id}$) applied to a specific PUSCH transmission and the $k_0$ value corresponding to the RV value. Based on this, the position of the first bit of the rate-matched bits transmitted on the PUSCH, starting from the encoded bits, is determined.

Method 2. Determining the start bit position based on the number of rate-matched bits in a previous transmission.

When determining the rate-matched bits used in a PUSCH transmission, a specific number of bits from the starting bit position among the encoded bits are determined as rate-matched bits.

When the PUSCH is transmitted repeatedly K times, the starting bit position ($k_0$) for selecting rate-matched bits from the encoded bits for each PUSCH transmission can be determined as follows.

Method 2-1.

When a PUSCH is transmitted repeatedly K times, the starting bit position for selecting rate-matched bits among the encoded bits for each PUSCH transmission can be determined as follows:

> i) For the first PUSCH transmission, the applicable RV value ($rv_{id}$) can be indicated through the DCI scheduling the PUSCH. The starting bit position is determined based on $k_0$ corresponding to the RV value.
>
> ii) From the second PUSCH transmission onwards, the starting bit position can be determined as follows. Let $k'0$ be the starting bit position for selecting rate-matched bits for the (n-1)-th PUSCH transmission among the encoded bits. Then, the bit position $k_{offset}$ from $k'0$ is determined as the starting bit position of the rate-matched bits for the n-th PUSCH transmission. In other words, the starting bit position of the rate-matched bits for the n-th PUSCH transmission is the ($k'0 + k_{offset}$)-th encoded bit.

The $k_{offset}$ value can be as follows:
Alt a. The $k_{offset}$ value may be equal to the number of rate-matched bits transmitted on the (n-1)-th PUSCH. The number of rate-matched bits transmitted on a specific PUSCH may be determined based on the number of PRBs used for the corresponding PUSCH transmission.

At this time, the number of PRBs used for PUSCH transmission may vary depending on whether the symbol resource on which the PUSCH transmission is performed is an SBFD symbol or a non-SBFD symbol. The number of PRBs used for PUSCH transmission may vary depending on whether a specific symbol is used as an SBFD symbol or a non-SBFD symbol, or whether the number of PRBs on which the PUSCH transmission is actually performed is set/determined semi-statically and/or dynamically.

When this information is dynamically indicated, if the UE fails to receive the indication, the base station and the UE may misunderstand the $k_{offset}$ value. This can lead to persistent discrepancies in the positions of rate-matched bits transmitted via subsequent PUSCH transmissions. To prevent this, the number of rate-matched bits transmitted via the PUSCH, used to determine the $k_{offset}$ value, can be determined based on the number of PUSCH transmission PRBs semi-statically set/determined (even if this number differs from the number of PRBs actually used in the PUSCH transmission).

In this case, when determining the rate-matched bits for the (n-1)-th PUSCH transmission, if $\tau$ filler bits are skipped and not selected for rate-matched bit determination, the starting bit position of the rate-matched bits for the n-th PUSCH transmission can be equal to $k'0 + k_{offsec} + \tau$.

Alt b. The $k_{offset}$ value may be a value configured by the base station to the UE. This configuration may be indicated via RRC signaling, etc.

Alt c. It may be equal to the product of $\alpha$ and the number of rate-matched bits determined assuming that the PUSCH is transmitted through $n_{PRB}$ PRBs. In this case, $\alpha$ may be a positive number less than or equal to 1. More specifically, the value of $\alpha$ may be determined as follows:

> i) $\alpha$ may be equal to $n'_{PRB}/n_{PRB}$.
>
> ii) $\alpha$ may be a value configured by the UE from the network. This value may be indicated via RRC signaling, etc.

Additionally, when applying Alt b or Alt c, the applied value may vary depending on the PUSCH transmission. To this end, the UE may receive multiple (e.g., two) $k_{offset}$ values (when Alt b is applied) or $\alpha$ values (when Alt c is applied) from the base station. In this case, different $k_{offset}$ values (when Alt b is applied) or $\alpha$ values (when Alt c is applied) may be applied depending on the PUSCH transmission. At this time, different $k_{offset}$ values (when Alt b is applied) or $\alpha$ values (when Alt c is applied) may be applied to a PUSCH transmission transmitted using $n_{PRB}$ PRBs and a PUSCH transmission transmitted using $n'_{PRB}$ PRBs.

According to the above method 2-1, when the starting bit positions of the first rate-matched bits in the (n-1)-th transmission are $k'_0$, i) if the (n-1)-th transmission is performed in an HD symbol, the starting bit positions of the second rate-matched bits in the n-th transmission may be $k'_0 + k_{0ffset1}$, and ii) if the (n-1)-th transmission is performed in an FD symbol, the starting bit positions of the second rate-matched bits in the n-th transmission may be $k'_0 + k_{0ffset2}$.

At this time, $k_{0ffset1}$ and $k_{0ffset2}$ may be set by the base station. Alternatively, $k_{0ffset1}$ and $k_{0ffset2}$ may be determined based on the number of PRBs used in the (n-1)-th transmission.

Method 2-2.

When a PUSCH is repeatedly transmitted K times, to determine the starting bit positions of rate-matched bits among the encoded bits for each PUSCH transmission, a $k_0$ value corresponding to a specific RV value may be applied. Alternatively, as described in Method 2-1 above, the starting bit position can be determined by the position that is offset from the starting bit position applied to the previous transmission.

Specifically, the starting bit position for selecting rate-matched bits among the encoded bits may be determined as follows.

For the first PUSCH transmission, the applicable RV value ($rv_{id}$) may be indicated through the DCI scheduling the PUSCH. The starting bit position is determined based on $k_0$ corresponding to the RV value.

From the second PUSCH transmission onwards, the starting bit position may be determined as follows.

The method for determining the starting bit position for the n-th PUSCH transmission may vary depending on the number of PRBs used for the (n-1)-th PUSCH transmission.

For example, if the (n-1)-th PUSCH transmission uses $n_{PRB}$ PRBs, and the most recently applied RV value ($rv_{id}$) in the PUSCH transmissions prior to the (n-1)-th PUSCH transmission is the z-th RV value, the RV value is cyclically shifted for the n-th PUSCH transmission to apply the ((z+1) mod Z)-th RV value, and the starting bit position is determined based on $k_0$ corresponding to the ((z+1) mod Z)-th RV value. Here, Z represents the total number of RV values (e.g., 4 in the existing NR standard).

When the (n-1)-th PUSCH transmission uses $n'_{PRB}$ PRBs, the aforementioned method 2-1 is applied to determine the starting bit position of the rate-matched bits in the n-th PUSCH transmission. For example, if the starting bit position for selecting rate-matched bits for the (n-1)-th PUSCH transmission is k'0, a bit position located $k_{offset}$ from k'0 can be determined as the starting bit position of the rate-matched bits for the n-th PUSCH transmission. That is, the starting bit position of the rate-matched bits for the n-th PUSCH transmission becomes the (k'0 + $k_{offset}$)-th encoded bit.

Depending on the embodiment, the method for determining the starting bit position applied to the n-th PUSCH transmission may vary depending on the position of (k'0 + $k_{offset}$).

For example, when the most recently applied RV value ($rv_{id}$) in the previous PUSCH transmissions of the (n-1)-th PUSCH transmission is the z-th RV value, and the starting bit position for selecting rate-matched bits for the (n-1)-th PUSCH transmission is k'0, if the value of the starting bit position determined by applying the aforementioned method 2-1 (e.g., k'0 + $k_{offset}$) is smaller than the $k_0$ value corresponding to the RV value of the 'z-th RV value' + 1, the value of the starting bit position determined by applying the above method 2-1 (e.g., k'0 + $k_{offset}$) is determined as the starting bit position applied to the n-th PUSCH transmission.

When the most recently applied RV value ($rv_{id}$) in the previous PUSCH transmissions of the (n-1)-th PUSCH transmission is the z-th RV value, and the starting bit position for selecting rate-matched bits for the (n-1)-th PUSCH transmission is k'0, if the value of the starting bit position determined by applying the above method 2-1 (e.g., a bit position separated by $k_{offset}$ from k'0) is equal to or greater than the $k_0$ value corresponding to the RV value of ('z-th RV value' + 1), the $k_0$ value corresponding to the '(z+1) mod Z'-th RV value is determined as the starting bit position applied to the n-th PUSCH transmission. At this time, Z means the total number of RV values (e.g., 4 in the case of the existing NR standard).

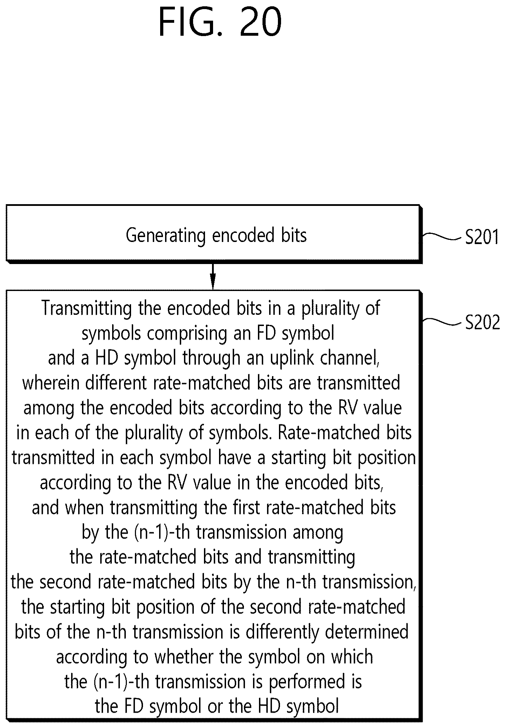

FIG. 20 illustrates an operation method of a UE in a wireless communication system.

Referring to FIG. 20, the UE generates encoded bits (S201).

The encoded bits are the result of encoding the information bits of a transport block and may include systematic bits and parity bits, as illustrated in FIG. 19.

The UE transmits the encoded bits in a plurality of symbols through an uplink channel, wherein the plurality of symbols include i) a full duplex (FD) symbol capable of simultaneously performing uplink operation and downlink operation using different frequency bands, and ii) a half duplex (HD) symbol capable of performing uplink operation or downlink operation, and transmits different rate-matched bits among the encoded bits according to an RV (redundancy version) value in each of the plurality of symbols, wherein rate-matched bits transmitted in each symbol have a starting bit position according to the RV value in the encoded bits, and when transmitting the first rate-matched bits by the (n-1)-th transmission (n is a natural number) among the rate-matched bits and transmitting the second rate-matched bits by the n-th transmission, the starting bit position of the second rate-matched bits of the n-th transmission is differently determined according to whether the symbol on which the (n-1)-th transmission is performed is the FD symbol or the HD symbol (S202).

Here, the RV value may be one of Z values (Z is a natural number greater than or equal to 2).

The uplink channel may be, for example, a PUSCH.

As described above in FIG. 19, in each transmission of a PUSCH repetition transmission, different rate-matched bits (transmitted bits) may be transmitted among the encoded bits. Each rate-matched bits may be bits with a specific bit length and a different starting bit position among the encoded bits.

For example, when different rate-matched bits (transmitted bits) among the encoded bits are transmitted N times (N is a natural number greater than or equal to 2), if the z-th value among the Z values is applied to the RV value in the (n-1)-th transmission, i) if the (n-1)-th transmission was performed in an HD symbol, the $((z+c) \bmod Z)$-th value among the Z values is applied to the RV value in the n-th transmission, and ii) if the (n-1)-th transmission was performed in an FD symbol, the $((z+1) \bmod Z)$-th value among the Z values is applied to the RV value in the n-th transmission. Here, z is any one of 0, 1, ..., Z-1, and mod is a modulo operation.

The above c may be i) a fixed integer greater than 1, ii) a value set by the base station to the UE, or iii) the aforementioned $\alpha$ value (e.g., the ratio of the number of physical resource blocks (PRBs) used for PUSCH transmission in the FD symbol to the number of PRBs used for physical uplink shared channel (PUSCH) transmission in the HD symbol).

According to an embodiment, when the starting bit position of the first rate-matched bits in the (n-1)-th transmission is $k'_0$, i) if the (n-1)-th transmission is performed in an HD symbol, the starting bit position of the second rate-matched bits in the n-th transmission may be $k'_0 + k_{0ffset1}$, and ii) if the (n-1)-th transmission is performed in an FD symbol, the starting bit position of the second rate-matched bits in the n-th transmission may be $k'_0 + k_{0ffset2}$

The above $k_{0ffset1}$ and $k_{0ffset2}$ may be set by the base station.

Alternatively, the above $K_{0ffset1}$ and $k_{0ffset2}$ may be determined based on the number of PRBs used in the (n-1)-th transmission.

According to the method of the present disclosure, when PUSCH repetition transmission is transmitted across different types of slots in the time domain, such as slots containing an FD slot and a HD slot, all encoded bits can be efficiently transmitted without loss even if the number of rate-matched coded bits that can be transmitted in each slot differs.

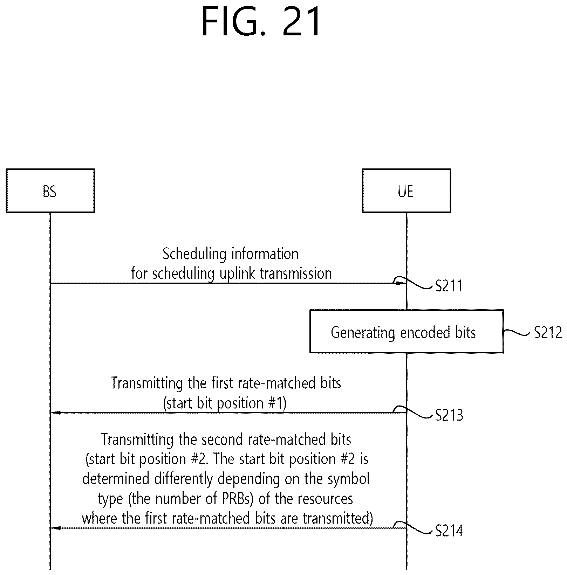

FIG. 21 illustrates the signaling process and operation between a base station and a UE when applying the method of FIG. 20.

Referring to FIG. 21, the base station provides scheduling information for scheduling uplink transmission to the UE (S211).

The UE generates encoded bits to be transmitted to the base station (S212) and transmits the first rate-matched bits among the encoded bits to the base station (S213). Let the starting bit position of the first rate-matched bits be start bit position #1.

The UE transmits the second rate-matched bits among the encoded bits to the base station (S214). Here, let the starting bit position of the second rate-matched bits be start bit position #2. Then, start bit position #2 is determined differently depending on the symbol type (number of PRBs) of the resources where the first rate-matched bits are transmitted. This has been described above with reference to FIG. 19 and 20.

B. Method for Determining Rate-Matched Bits for TBoMS Transmission

For TBoMS transmission, the UE selects $E_r$ rate-matched bits from among $N_r$ encoded bits for each code block transmitted on the PUSCH.

For TBoMS transmission in a specific slot, the UE determines a specific number of bits from the starting bit position $(= k_0)$ among the encoded bits as rate-matched bits.

If a slot is a slot other than the first slot among $N_s$ slots, $k_0$ is set to $(k'_0+H+\tau) \bmod N_{cb}$, where $N_s$ may be the 'numberOfSlotsTBoMS' value of the row indicated by the time-domain resource allocation field in the DCI. $k'_0$ represents the index of the starting coded bit in the previous slot within $N_s$ slots. H is the total number of coded bits available for transmitting a transport block in the previous slot within $N_s$ slots, assuming no UCI multiplexing. $\tau$ represents the number of filler bits skipped from the previous slot within the $N_s$ slots, assuming no UCI multiplexing.

Here, the value of H used to determine the starting bit position $= k_0$ may be:

Assuming no UCI multiplexing, the total number of coded bits available for transmission of the transport block in the previous slot within the $N_s$ slots (assuming no UCI multiplexing). In other words, H may represent the number of encoded bits transmitted with rate matching in the previous TBoMS transmission slot.

Meanwhile, in an SBFD environment, when transmitting TBoMS, if the number of PRBs used for transmission may vary for each TBoMS transmission slot, the value of H may vary for each TBoMS slot. In other words, the applicable value of H may vary depending on whether a TBoMS transmission uses $n_{PRB}$ PRBs or $n'_{PRB}$ PRBs in a particular slot.

At this time, the number of PRBs used for PUSCH transmission may vary depending on whether the symbol resource on which the PUSCH transmission is performed is an SBFD symbol or a non-SBFD symbol. This may vary depending on whether a specific symbol is used as an SBFD symbol or a non-SBFD symbol, and whether the number of PRBs over which the PUSCH transmission is actually performed is semi-statically and/or dynamically set/determined. If this information is dynamically indicated, the base station and the UE may have different understandings of the $k_{offset}$ value if the UE fails to receive the indication. This could lead to persistent discrepancies between the base station and the UE regarding the positions of rate-matched bits transmitted via subsequent PUSCH transmissions. To prevent this, the number of rate-matched bits transmitted via the PUSCH, used to determine the $k_{offset}$ value, can be determined based on the number of PUSCH transmission PRBs semi-statically set/determined (even if this number differs from the number of PRBs actually used for the PUSCH transmission).

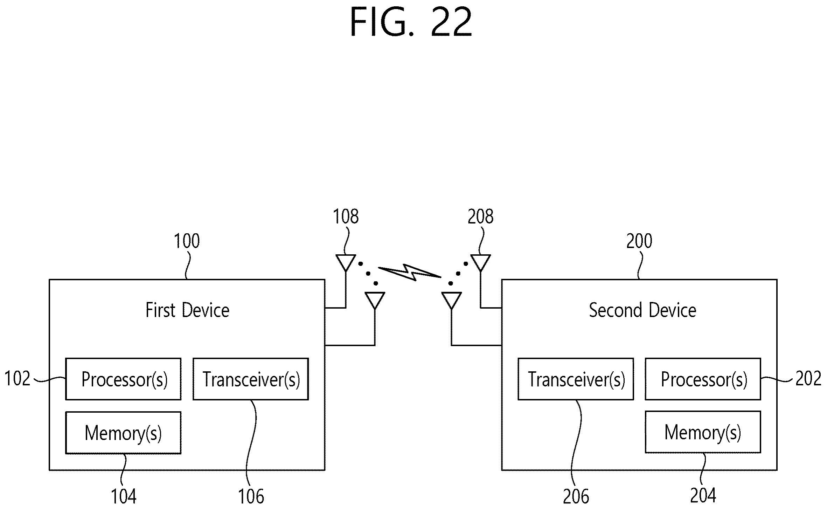

FIG. 22 illustrates a wireless device applicable to the present specification.

Referring to FIG. 22, a first wireless device 100 and a second wireless device 200 may transmit radio signals through a variety of RATs (e.g., LTE and NR).

A first wireless device 100 includes at least one processor 102 and at least one memory 104, and may further include at least one transceiver 106 and/or at least one antenna 108. The at least one processor 102 (hereinafter simply referred to as a processor) controls at least one memory 104 (hereinafter simply referred to as a memory) and/or at least one transceiver 106 (hereinafter simply referred to as a transceiver or a transceiver), and may be configured to implement the descriptions, functions, procedures, proposals, methods and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. A processor (102) generates encoded bits and transmits the encoded bits through an uplink channel in a plurality of symbols. The plurality of symbols include i) a full duplex (FD) symbol capable of simultaneously performing uplink operation and downlink operation using different frequency bands, and ii) a half duplex (HD) symbol capable of performing uplink operation or downlink operation, and transmits different rate-matched bits among the encoded bits according to an RV (redundancy version) value in each of the plurality of symbols. The rate-matched bits transmitted in each symbol have a starting bit position according to the RV value in the encoded bits, and when transmitting the first rate-matched bits by the (n-1)-th transmission (where n is a natural number) among the rate-matched bits and transmitting the second rate-matched bits by the n-th transmission, the starting bit position of the second rate-matched bits of the n-th transmission is determined differently depending on whether the symbol on which the (n-1)-th transmission is performed is the FD symbol or the HD symbol. The specific operation has been described with reference to FIGS. 19 to 21.

The second wireless device 200 includes at least one processor 202, at least one memory 204, and may further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 receives encoded bits in a plurality of symbols over an uplink channel, wherein the plurality of symbols include: i) a full duplex (FD) symbol capable of simultaneously performing uplink operation and downlink operation using different frequency bands, and ii) a half duplex (HD) symbol capable of performing uplink operation or downlink operation. The processor 202 receives different rate-matched bits among the encoded bits according to a redundancy version (RV) value in each of the plurality of symbols, wherein the rate-matched bits received in each symbol have a starting bit position based on the RV value in the encoded bits. When the processor 202 receives the first rate-matched bits by the (n-1)-th reception (n is a natural number) among the rate-matched bits and receives the second rate-matched bits by the n-th reception, the starting bit position of the second rate-matched bits of the n-th reception is determined differently depending on whether the symbol for which the (n-1)-th reception is performed is the FD symbol or the HD symbol. The specific operation thereof has been described with reference to FIGS. 19 to 21.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) including instructions based on being executed by at least one processor performs the steps of generating encoded bits, and transmitting the encoded bits in a plurality of symbols through an uplink channel. At this time, the plurality of symbols include i) a full duplex (FD) symbol capable of simultaneously performing uplink operation and downlink operation using different frequency bands, and ii) a half duplex (HD) symbol capable of performing uplink operation or downlink operation, and transmits different rate-matched bits among the encoded bits according to an RV (redundancy version) value in each of the plurality of symbols. The rate-matched bits transmitted in each symbol have a starting bit position according to the RV value in the encoded bits, and when transmitting the first rate-matched bits by the (n-1)-th transmission (where n is a natural number) among the rate-matched bits and transmitting the second rate-matched bits by the n-th transmission, the starting bit position of the second rate-matched bits of the n-th transmission is determined differently depending on whether the symbol on which the (n-1)-th transmission is performed is the FD symbol or the HD symbol. The specific operation has been described with reference to FIGS. 19 to 21.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

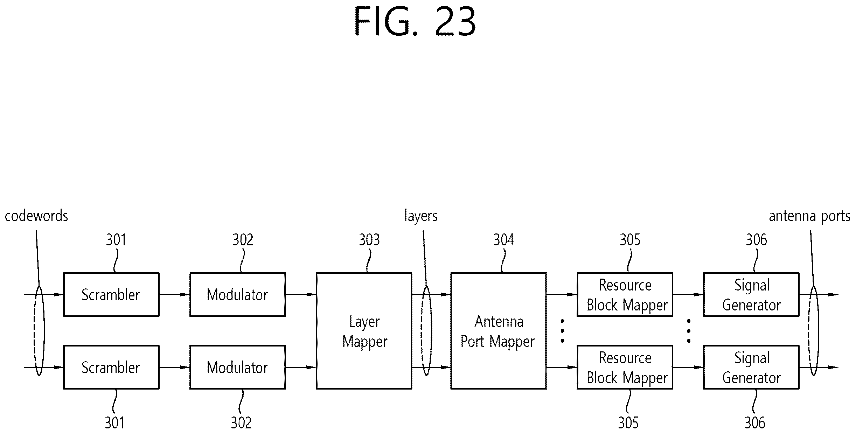

FIG. 23 shows an example of a structure of a signal processing module. Herein, signal processing may be performed in the processors 102 and 202 of FIG. 22.

Referring to FIG. 23, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

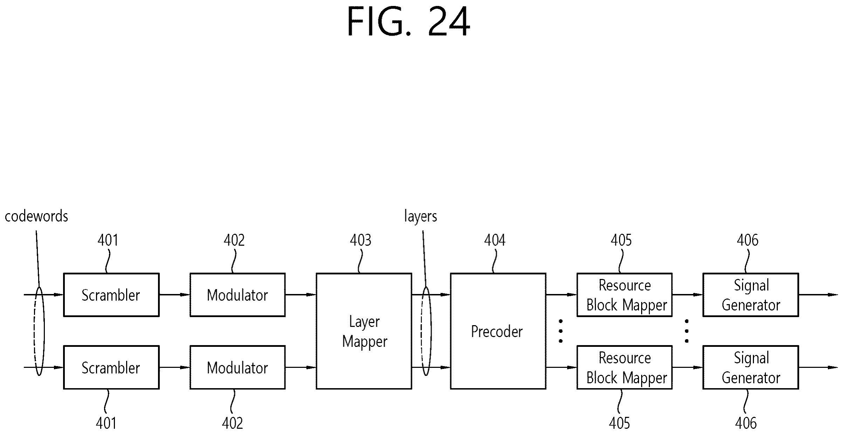

FIG. 24 shows another example of a structure of a signal processing module in a transmitting device. Herein, signal processing may be performed in a processor of a UE/BS, such as the processors 102 and 202 of FIG. 22.

Referring to FIG. 24, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

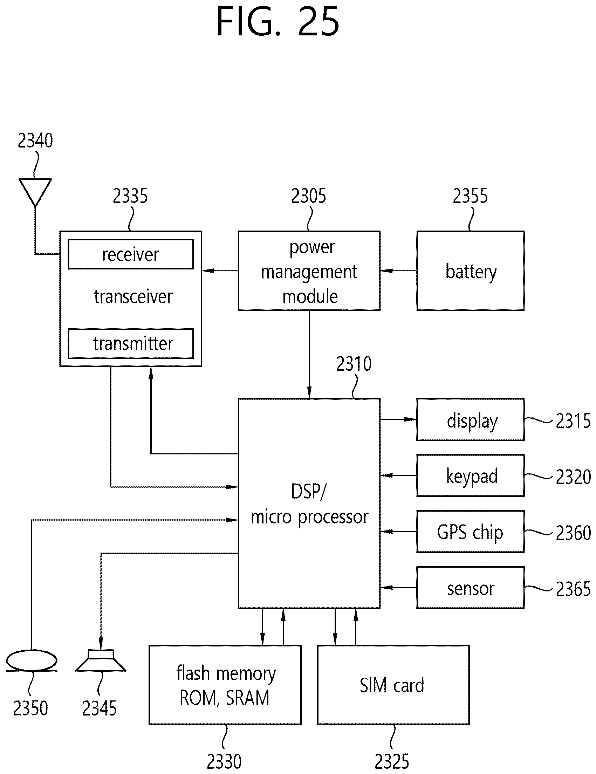

FIG. 25 illustrates an example of a wireless communication device according to an implementation example of the present disclosure.

Referring to FIG. 25, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 25 may be the processors 102 and 202 in FIG. 22.

The memory 2330 is connected to the processor 2310 and stores information related to operations of the processor. The memory may be located inside or outside the processor and connected to the processor through various techniques such as wired connection and wireless connection. The memory 2330 in FIG. 25 may be the memories 104 and 204 in FIG. 22.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 25 may be the transceivers 106 and 206 in FIG. 29.

Although not shown in FIG. 25, various components such as a camera and a universal serial bus (USB) port may be additionally included in the UE. For example, the camera may be connected to the processor 2310.

FIG. 25 is an example of implementation with respect to the UE and implementation examples of the present disclosure are not limited thereto. The UE need not essentially include all the components shown in FIG. 25. That is, some of the components, for example, the keypad 2320, the GPS chip 2360, the sensor 2365 and the SIM card 2325 may not be essential components. In this case, they may not be included in the UE.

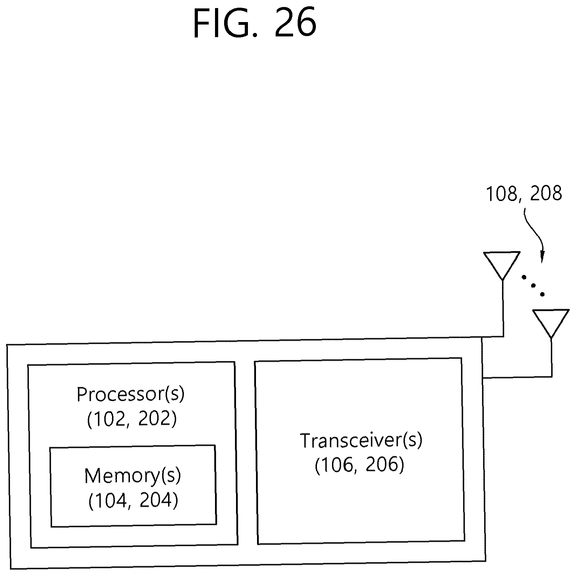

FIG. 26 shows another example of a wireless device.

Referring to FIG. 26, the wireless device may include one or more processors 102 and 202, one or more memories 104 and 204, one or more transceivers 106 and 206 and one or more antennas 108 and 208.

The example of the wireless device described in FIG. 26 is different from the example of the wireless described in FIG. 22 in that the processors 102 and 202 and the memories 104 and 204 are separated in FIG. 22 whereas the memories 104 and 204 are included in the processors 102 and 202 in the example of FIG. 26. That is, the processor and the memory may constitute one chipset.

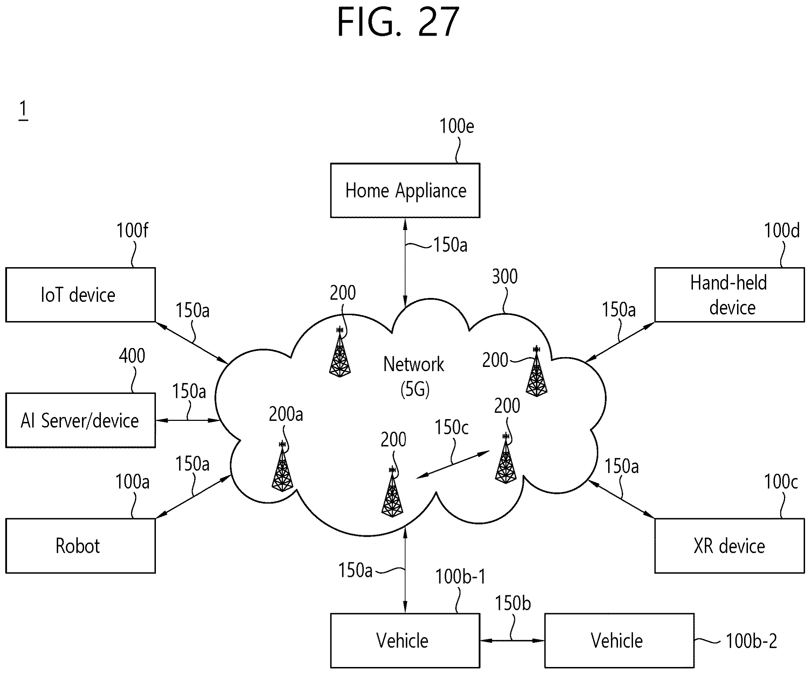

FIG. 27 illustrates a communication system 1 applied to the present specification.

Referring to FIG. 27, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 6. For convenience of explanation, among the frequency ranges that are used in an NR system, FR1 may mean a "sub 6GHz range", and FR2 may mean an "above 6GHz range" and may also be referred to as a millimeter wave (mmW).

[Table 11]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 12 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 12] **[601]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1.  A method of operating a user equipment (UE) in a wireless communication system, the method comprising:

    generating encoded bits; and
    transmitting the encoded bits through an uplink channel in a plurality of symbols,
    wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,
    wherein, in each of the plurality of symbols, different rate-matched bits among the encoded bits are transmitted according to a redundancy version (RV) value,
    wherein rate-matched bits transmitted in each symbol have a starting bit position in the encoded bits according to the RV value, and
    wherein, based on first rate-matched bits being transmitted by an (n-1)-th transmission (where the n is a natural number) and second rate-matched bits being transmitted by an n-th transmission,
    a starting bit position of the second rate-matched bits in the n-th transmission is determined differently depending on whether a symbol in which the (n-1)-th transmission is performed is the FD symbol or the HD symbol.

2.  The method of claim 1, wherein the RV value is one of Z values, where the Z is a natural number equal to or greater than 2.

3.  The method of claim 2, wherein, based on a z-th value among the Z values being applied as an RV value in the (n-1)-th transmission,

    based on the (n-1)-th transmission being performed in the HD symbol, an RV value in the n-th transmission is applied as a $((z+c) \bmod Z)$-th value among the Z values, and
    based on the (n-1)-th transmission being performed in the FD symbol, an RV value in the n-th transmission is applied as a $((z+1) \bmod Z)$-th value among the Z values,
    wherein the z is any one of 0, 1, ..., Z-1, and the mod denotes a modulo operation.

4.  The method of claim 3, wherein the c is a fixed integer greater than 1.

5.  The method of claim 3, wherein the c is a value configured for the UE by a base station.

6.  The method of claim 3, wherein the c is a ratio of the number of physical resource blocks (PRBs) used for physical uplink shared channel (PUSCH) transmission in the FD symbol to the number of PRBs used for PUSCH transmission in the HD symbol.

7. The method of claim 1, wherein, based on a starting bit position of the first rate-matched bits transmitted by the (n-1)-th transmission being $k'_0$,

    based on the (n-1)-th transmission being performed in the HD symbol, a starting bit position of the second rate-matched bits in the n-th transmission is $k'_0 + k_{offset1}$, and
    based on the (n-1)-th transmission being performed in the FD symbol, a starting bit position of the second rate-matched bits in the n-th transmission is $k'_0 + K_{offset2}$.

8. The method of claim 7, wherein the $k_{offset1}$ and the $k_{offset2}$ are configured by a base station.

9. The method of claim 7, wherein the $k_{offset1}$ and the $k_{offset2}$ are determined based on the number of PRBs used in the (n-1)-th transmission.

10. A user equipment (UE) comprising:

    at least one transceiver;
    at least one memory; and
    at least one processor operably coupled to the at least one memory and the at least one transceiver, wherein the at least one processor is adapted to:

        generate encoded bits; and
        transmit the encoded bits through an uplink channel in a plurality of symbols,
        wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,
        wherein, in each of the plurality of symbols, different rate-matched bits among the encoded bits are transmitted according to a redundancy version (RV) value,
        wherein rate-matched bits transmitted in each symbol have a starting bit position in the encoded bits according to the RV value, and
        wherein, based on first rate-matched bits being transmitted by an (n-1)-th transmission (where the n is a natural number) and second rate-matched bits being transmitted by an n-th transmission,
        a starting bit position of the second rate-matched bits in the n-th transmission is determined differently depending on whether a symbol in which the (n-1)-th transmission is performed is the FD symbol or the HD symbol.

11. The UE of claim 10, wherein the RV value is one of Z values, where the Z is a natural number equal to or greater than 2.

12. The UE of claim 11, wherein, based on a z-th value among the Z values being applied as an RV value in the (n-1)-th transmission,

    based on the (n-1)-th transmission being performed in the HD symbol, an RV value in the n-th transmission is applied as a $((z+c) \bmod Z)$-th value among the Z values, and
    based on the (n-1)-th transmission being performed in the FD symbol, an RV value in the n-th transmission is applied as a $((z+1) \bmod Z)$-th value among the Z values,
    wherein the z is any one of 0, 1, ..., Z-1, and the mod denotes a modulo operation.

13. The UE of claim 12, wherein the c is a fixed integer greater than 1.

14. The UE of claim 12, wherein the c is a value configured for the UE by a base station.

15. The UE of claim 12, wherein the c is a ratio of the number of physical resource blocks (PRBs) used for physical uplink shared channel (PUSCH) transmission in the FD symbol to the number of PRBs used for PUSCH transmission in the HD symbol.

16. The UE of claim 10, wherein, based on a starting bit position of the first rate-matched bits transmitted by the (n-1)-th transmission being $k'_0$,

    based on the (n-1)-th transmission being performed in the HD symbol, a starting bit position of the second rate-matched bits in the n-th transmission is $k'_0 + k_{offset1}$, and

based on the (n-1)-th transmission being performed in the FD symbol, a starting bit position of the second rate-matched bits in the n-th transmission is $k'_0 + k_{offset22}$.

17. The UE of claim 16, wherein the $k_{offset1}$ and the $k_{offset2}$ are configured by a base station.

18. The UE of claim 16, wherein the $k_{offset1}$ and the $k_{offset2}$ are determined based on the number of PRBs used in the (n-1)-th transmission.

19. An apparatus comprising:

at least one memory; and
at least one processor operably coupled to the at least one memory,
wherein the at least one processor is adapted to:

generate encoded bits; and
transmit the encoded bits through an uplink channel in a plurality of symbols,
wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,
wherein, in each of the plurality of symbols, different rate-matched bits among the encoded bits are transmitted according to a redundancy version (RV) value,
wherein rate-matched bits transmitted in each symbol have a starting bit position in the encoded bits according to the RV value, and
wherein, based on first rate-matched bits being transmitted by an (n-1)-th transmission (where the n is a natural number) and second rate-matched bits being transmitted by an n-th transmission,
a starting bit position of the second rate-matched bits in the n-th transmission is determined differently depending on whether a symbol in which the (n-1)-th transmission is performed is the FD symbol or the HD symbol.

20. At least one computer readable medium (CRM) having instructions to be executed by at least one processor to perform operations includes:

generating encoded bits; and
transmitting the encoded bits through an uplink channel in a plurality of symbols,
wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,
wherein, in each of the plurality of symbols, different rate-matched bits among the encoded bits are transmitted according to a redundancy version (RV) value,
wherein rate-matched bits transmitted in each symbol have a starting bit position in the encoded bits according to the RV value, and
wherein, based on first rate-matched bits being transmitted by an (n-1)-th transmission (where the n is a natural number) and second rate-matched bits being transmitted by an n-th transmission,
a starting bit position of the second rate-matched bits in the n-th transmission is determined differently depending on whether a symbol in which the (n-1)-th transmission is performed is the FD symbol or the HD symbol.

21. A method of operating a base station in a wireless communication system, the method comprising:

receiving encoded bits in a plurality of symbols through an uplink channel,
wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,
wherein, in each of the plurality of symbols, different rate-matched bits among the encoded bits are received according to a redundancy version (RV) value,
wherein rate-matched bits received in each symbol have a starting bit position in the encoded bits according to the RV value, and
wherein, based on first rate-matched bits being received by an (n-1)-th reception (where the n is a natural number) and second rate-matched bits being received by an n-th reception,

a starting bit position of the second rate-matched bits in the n-th reception is determined differently depending on whether a symbol in which the (n-1)-th reception is performed is the FD symbol or the HD symbol.

22. A base station (BS) comprising:

at least one transceiver;

at least one memory; and

at least one processor operably coupled to the at least one memory and the at least one transceiver, wherein the at least one processor is adapted to:

receive encoded bits in a plurality of symbols through an uplink channel,

wherein the plurality of symbols comprise i) a full duplex (FD) symbol capable of simultaneously performing uplink operation and downlink operation using different frequency bands, and ii) a half duplex (HD) symbol capable of performing uplink operation or downlink operation,

wherein, in each of the plurality of symbols, different rate-matched bits among the encoded bits are received according to a redundancy version (RV) value,

wherein rate-matched bits received in each symbol have a starting bit position in the encoded bits according to the RV value, and

wherein, based on first rate-matched bits being received by an (n-1)-th reception (where the n is a natural number) and second rate-matched bits being received by an n-th reception,

a starting bit position of the second rate-matched bits in the n-th reception is determined differently depending on whether a symbol in which the (n-1)-th reception is performed is the FD symbol or the HD symbol.

# FIG. 1

# FIG. 2

# FIG. 3

# FIG. 4

# FIG. 5

**gNB**

| RRM between cells |
|---|
| RB control |
| Connection mobility control |
| Wireless access control |
| Measurement setting and provision |
| Dynamic resource allocation (scheduler) |

NG-RAN

**AMF**

| NAS security |
|---|
| Idle state mobility processing |

**UPF**

| Mobility anchoring |
|---|
| PDU processing |

5GC

**SMF**

| UE IP address allocation |
|---|
| PDU session control |

Internet

EP 4 693 968 A2

# FIG. 6

| ··· | One Frame (10ms) | ··· |
|---|---|---|

| ··· | Half-Frame (5ms) | Half-Frame (5ms) | ··· |
|---|---|---|---|

| ··· | Subframe 0 (1ms) | ··· | Subframe 4 (1ms) | Subframe 5 (1ms) | ··· | Subframe 9 (1ms) | ··· |
|---|---|---|---|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 7

# FIG. 8

CCE #2    CCE #n

$N^{CORESET}_{RB}$ resource blocks

CCE #1

1, 2 or 3 OFDM symbols

# FIG. 9

Downlink only, or Uplink only

Frequency

RB index

5
4
3
2
1
0

Symbol index
0 1 2 3 4 5 6 7 8 9 10 11 12 13

One TTI

DL Control channel       UL Control channel

EP 4 693 968 A2

# FIG. 10

DL only

UL only

UL control

DL control

Mixed UL-DL

Slot

: DL     : UL

# FIG. 11

| Initial cell search | system information reception | random access procedure | | | | general DL/UL Tx/Rx | |
|---|---|---|---|---|---|---|---|
| P/S-SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH |
| S11 | S12 | S13 | S14 | S15 | S16 | S17 | S18 |

• DL/UL ACK/NACK
• UE CQI/PMI/Rank report using PUSCH and/or PUCCH

# FIG. 12

PUSCH repetition type A

# FIG. 13

(a)

(b)

# FIG. 14

(a)

Carrier #0
Subband-wise Full Duplex

(b)

Carrier #0
Spectrum-Sharing Full Duplex

# FIG. 15

(a)

(b)

# FIG. 16

A: First time resource
B: Second time resource

(a)

(b)

# FIG. 17

A: First time resource
B: Second time resource

(a)

(b)

# FIG. 18

EP 4 693 968 A2

: PRBs allocated for PUSCH transmission

# FIG. 19

EP 4 693 968 A2

# FIG. 20

Generating encoded bits ~ S201

Transmitting the encoded bits in a plurality of symbols comprising an FD symbol and a HD symbol through an uplink channel, wherein different rate-matched bits are transmitted among the encoded bits according to the RV value in each of the plurality of symbols. Rate-matched bits transmitted in each symbol have a starting bit position according to the RV value in the encoded bits, and when transmitting the first rate-matched bits by the (n-1)-th transmission among the rate-matched bits and transmitting the second rate-matched bits by the n-th transmission, the starting bit position of the second rate-matched bits of the n-th transmission is differently determined according to whether the symbol on which the (n-1)-th transmission is performed is the FD symbol or the HD symbol ~ S202

# FIG. 21

```
┌─────────┐                                    ┌─────────┐
│   BS    │                                    │   UE    │
└─────────┘                                    └─────────┘
     │                                              │
     │         Scheduling information               │
     │     for scheduling uplink transmission       │
     │─────────────────────────────────────────────▶│  S211
     │                                              │
     │                              ┌───────────────────────────┐
     │                              │  Generating encoded bits  │  S212
     │                              └───────────────────────────┘
     │                                              │
     │       Transmitting the first rate-matched bits
     │              (start bit position #1)         │
     │◀─────────────────────────────────────────────│  S213
     │                                              │
     │       Transmitting the second rate-matched bits
     │     (start bit position #2. The start bit position #2 is
     │     determined differently depending on the symbol
     │        type (the number of PRBs) of the resources
     │    where the first rate-matched bits are transmitted)
     │◀─────────────────────────────────────────────│  S214
     │                                              │
```

# FIG. 22

# FIG. 23

EP 4 693 968 A2

codewords → 301 Scrambler → 302 Modulator → 303 Layer Mapper → layers → 304 Antenna Port Mapper → 305 Resource Block Mapper → 306 Signal Generator → antenna ports

301 Scrambler → 302 Modulator ... 305 Resource Block Mapper → 306 Signal Generator

# FIG. 24

codewords

layers

| 401 | 402 | 403 | 404 | 405 | 406 |
|-----|-----|-----|-----|-----|-----|
| Scrambler | Modulator | Layer Mapper | Precoder | Resource Block Mapper | Signal Generator |
| Scrambler | Modulator | | | Resource Block Mapper | Signal Generator |

401    402                                    405      406

# FIG. 25

# FIG. 26

108, 208

Processor(s)
(102, 202)

Memory(s)
(104, 204)

Transceiver(s)
(106, 206)

# FIG. 27

1

100e — Home Appliance

150a

100f — IoT device

150a

400 — AI Server/device

150a

100a

150a

Robot

200 — Network (5G)

200a

200

150c

200

300

100d — Hand-held device

150a

200

100c — XR device

150a

150a

100b-1 — Vehicle

150b

Vehicle — 100b-2

EP 4 693 968 A2